# EUROPÄISCHE PATENTSCHRIFT

(11) **EP 4 476 459 B1**
(45) Veröffentlichungstag und Bekanntmachung des Hinweises auf die Patenterteilung: **08.04.2026**
(21) Anmeldenummer: 23705243.6
(22) Anmeldetag: 13.02.2023
(51) Int. Cl.: F16B 21/07, E05B 51/02

(54) **VERBINDUNGSSYSTEM, MECHANISCHE VORRICHTUNG UND VERFAHREN ZUM AUTOMATISCHEN LÖSEN VON ZWEI MIT EINEM VERBINDUNGSSYSTEM MITEINANDER VERBUNDENER KOMPONENTEN VONEINANDER**
CONNECTION SYSTEM, MECHANICAL DEVICE AND METHOD FOR AUTOMATICALLY RELEASING TWO COMPONENTS THAT ARE CONNECTED TO ONE ANOTHER WITH A CONNECTION SYSTEM FROM ONE ANOTHER
SYSTÈME DE CONNEXION, DISPOSITIF MÉCANIQUE ET PROCÉDÉ POUR LIBÉRER AUTOMATIQUEMENT L'UN DE L'AUTRE DEUX COMPOSANTS RELIÉS L'UN À L'AUTRE PAR UN SYSTÈME DE CONNEXION

(30) Priorität: 11.02.2022 DE 102022103300
(43) Veröffentlichungstag der Anmeldung: 18.12.2024
(73) Patentinhaber: Studinsky, Tilmann Hendrik, 40215 Düsseldorf (DE); Bossard Group AG, 6301 Zug (CH)
(72) Erfinder: STUDINSKY, Tilmann, 40215 Düsseldorf (DE)
(74) Vertreter: Hoeger, Stellrecht & Partner Patentanwälte mbB
(86) Internationale Anmeldenummer: PCT/EP2023/053526
(87) Internationale Veröffentlichungsnummer: WO 2023/152381

(56) Entgegenhaltungen:
- EP-A2- 0 335 778
- DE-A1- 102017 010 745
- DE-U1- 202018 004 755
- US-A- 5 765 883
- US-A1- 2016 363 262
- US-B1- 9 567 774

## Beschreibung

Die vorliegende Erfindung betrifft ein Verbindungssystem, insbesondere zum kraft- und/oder formschlüssigen Verbinden einer ersten Komponente und einer zweiten Komponente, wobei das Verbindungssystem einen Verbinder mit einem Gehäuse umfasst, wobei im Gehäuse eine eine Kopplungslängsachse definierende Kopplungsaufnahme zum Aufnehmen eines Verbindungselements ausgebildet ist, wobei am Gehäuse eine Sicherungseinrichtung angeordnet oder ausgebildet ist zum Sichern eines in die Kopplungsaufnahme eingreifenden Verbindungselements in einer Sicherungsstellung, wobei die Sicherungseinrichtung mindestens ein erstes Sicherungselement umfasst, welches am Gehäuse in einer Ebene quer, insbesondere senkrecht, zur Kopplungslängsachse bewegbar angeordnet oder ausgebildet ist und in der Sicherungsstellung mindestens teilweise mit einem ersten Sicherungsabschnitt in die Kopplungsaufnahme eingreift, wobei das mindestens eine Sicherungselement ein vorspannendes Element umfasst, welches mit dem ersten Sicherungsabschnitt derart zusammenwirkend angeordnet oder ausgebildet ist, dass der erste Sicherungsabschnitt entgegen der Wirkung des vorspannenden Elements von der Sicherungsstellung in eine Freigabestellung bewegbar ist, in welcher das mindestens eine Sicherungselement die Kopplungsaufnahme zumindest so weit freigibt, dass ein in die Kopplungsaufnahme eingreifendes Verbindungselement parallel zur Kopplungslängsachse bewegbar ist.

Ferner betrifft die vorliegende Erfindung eine mechanische Vorrichtung mit einer ersten Komponente und einer zweiten Komponente, wobei die erste Komponente und die zweite Komponente miteinander verbunden sind.

Überdies betrifft die vorliegende Erfindung ein Verfahren zum automatischen Lösen einer ersten Komponente und einer zweiten Komponente voneinander, welche miteinander verbunden sind.

Mechanische Vorrichtungen mit mindestens zwei miteinander verbundenen Komponenten sind in vielfacher Weise bekannt. Beispielsweise sind sie in Form zwei- oder mehrteiliger Gehäuse ausgebildet, die für vielfältige Zwecke eingesetzt werden können, beispielsweise als Gehäuse von Elektrogeräten.

Es ist bekannt, zwei Komponenten miteinander zu verschrauben oder mittels Rast- oder Schnappverbindungen miteinander zu verbinden. Ein Problem bei derartigen Verbindungen ist insbesondere, dass sie nur sehr aufwendig zu lösen sind, teilweise auch nur durch Zerstören von Teilen der miteinander verbundenen Komponenten. Insbesondere bei Rast- oder Schnappverbindungssystemen brechen dabei häufig Rastnasen ab.

Das Lösen von zwei miteinander verbundenen Komponenten gewinnt unter Berücksichtigung der steigenden Menge an Elektroschrott zunehmend an Bedeutung. Insbesondere im Hinblick auf eine Wiederverwertung von in Elektroschrott enthaltenen Rohstoffen, wie beispielsweise Gold oder seltene Erdmetalle, wäre es wünschenswert, ein Verbindungssystem bereitzustellen, welches insbesondere ein automatisches Lösen von zwei miteinander verbundenen Komponenten ermöglichen würde.

Aus der US 2016/0363262 A1 ist eine Montagevorrichtung bekannt.

Es ist daher eine Aufgabe der vorliegenden Erfindung, ein Verbindungssystem, eine mechanische Vorrichtung sowie ein Verfahren der eingangs beschriebenen Art so zu verbessern, dass ein automatisches Lösen von zwei miteinander verbundenen Komponenten ermöglicht wird.

Diese Aufgabe wird bei einem Verbindungssystem der eingangs beschriebenen Art erfindungsgemäß dadurch gelöst, dass das vorspannende Element komprimierbar ausgebildet ist derart, dass es durch Erhöhen eines isotropen Umgebungsdrucks von einer unkomprimierten Ausgangsstellung in eine komprimierte Druckstellung, in welcher ein vom vorspannenden Element definiertes Hüllvolumen kleiner ist als in der Ausgangsstellung, bringbar ist, und dass das vorspannende Element in der Freigabestellung die Druckstellung einnimmt.

Ein Verbindungsystem der eingangs beschriebenen Art in der vorgeschlagenen Weise weiterzubilden ermöglicht insbesondere ein automatisches Lösen zweier mit einem solchen Verbindungssystem miteinander verbundener Komponenten voneinander. Hierfür werden keine Werkzeuge oder dergleichen benötigt, sondern es muss lediglich ein in einer Umgebung des Verbindungssystems herrschender Druck erhöht werden. Beispielsweise können zwei miteinander verbundene Komponenten in eine Druckkammer eingebracht werden, in welcher der Druck erhöht wird, sodass das vorspannende Element von der unkomprimierten Ausgangsstellung in die komprimierte Druckstellung überführt wird, sodass ein in der Kopplungsaufnahme aufgenommenes Verbindungselement aus dieser herausbewegt werden kann. Wird die Druckkammer nach Erhöhung des in ihr herrschenden Druck beispielsweise gedreht oder geschüttelt, können sich die miteinander verbundenen Komponenten lösen. Hierfür bedarf es somit keines händischen Eingriffs. Wird beispielsweise ein Gehäuse eines Elektrogeräts ausschließlich mit einem erfindungsgemäßen Verbindungssystem zusammengebaut, lässt es sich in der beschriebenen Weise automatisch und insbesondere rein maschinell in seine Bestandteile zerlegen. Insbesondere kann bei einem solchen Verbindungssystem auf Schraubverbindungen vollständig verzichtet werden. Diese erfordern einen signifikant höheren Aufwand zum Lösen als das erfindungsgemäß vorgeschlagene Verbindungssystem. Zum vorspannenden Element ist insbesondere anzumerken, dass eine Schraubenfeder allein als vorspannendes Element des Verbindungssystems nicht geeignet ist, da sie nicht durch eine Änderung des Umgebungsdruck von einer unkomprimierten Stellung in eine komprimierte Stellung überführbar ist.

Günstig ist es, wenn das vorspannende Element in der Sicherungsstellung die Ausgangsstellung einnimmt. Das vorspannende Element kann also in der Sicherungsstellung insbesondere komplett unkomprimiert sein. Alternativ kann es in der Sicherungsstellung auch bereits teilweise komprimiert sein, um eine Haltekraft zu erhöhen und so eine besonders sichere Verbindung zu realisieren.

Gemäß einer bevorzugten Ausführungsform der Erfindung kann vorgesehen sein, dass das vorspannende Element in Form eines komprimierbaren Schaumkörpers oder in Form eines elastischen Hüllkörpers mit mindestens einem abgeschlossenen Hohlraum ausgebildet ist. Der Schaumkörper kann insbesondere isotrop komprimierbar ausgebildet sein. Der abgeschlossene Hohlraum des elastischen Hüllkörpers ist vorzugsweise fluiddicht ausgebildet. Sind der Schaumkörper beziehungsweise der Hüllkörper mit einem Fluid befüllt, können sie ihr Volumen durch Änderung eines Umgebungsdrucks ändern. Wird der Umgebungsdruck erhöht, werden der Schaumkörper und auch der Hüllkörper zusammengedrückt. Wird ein Umgebungsdruck erniedrigt, dehnen sich die genannten vorspannenden Elemente aus und nehmen ein größeres Volumen ein. Ein elastischer Hüllkörper kann beispielsweise in Form eines geschlossenen Ballons ausgebildet sein, welche in geeigneter Weise am Gehäuse des Verbinders angeordnet ist.

Vorzugsweise ist der Schaumkörper aus einem geschlossenzelligen oder zumindest teilweise geschlossenzelligen Schaumstoff ausgebildet. Teilweise geschlossenzellig bedeutet, dass mindestens ein Teil der vom Schaumkörper umfassten Zellen, welche Hohlräume definieren, geschlossen, also fluiddicht beziehungsweise gasdicht, ausgebildet sind, sodass diese auf eine Änderung eines Umgebungsdrucks reagieren können und somit eine Größe der jeweiligen Zelle vergrößert oder verkleinert werden kann, je nachdem, ob der Umgebungsdruck ab- oder zunimmt.

Günstig ist es, wenn der Schaumkörper eine Vielzahl von geschlossenen gasdichten Hohlräumen umfasst und wenn die Hohlräume mit einem komprimierbaren Fluid gefüllt sind. Diese Ausgestaltung ermöglicht es insbesondere, den Schaumkörper durch Erhöhen eines Umgebungsdrucks zu komprimieren. Das in den Hohlräumen enthaltene komprimierbare Fluid kann bei Erhöhen eines Umgebungsdrucks komprimiert werden, sodass sich die Größe der Hohlräume jeweils verringert und damit insgesamt der Schaumkörper ein von ihm definiertes Hüllvolumen verkleinert.

Einfach und kostengünstig ausbilden lässt sich das Verbindungssystem, wenn das komprimierbare Fluid ein Gas ist. Insbesondere kann es ein Inertgas oder Luft sein.

Einfach und kostengünstig lässt sich das Verbindungssystem ausbilden, wenn der Schaumkörper aus einem geschäumten Kunststoff ausgebildet ist. Insbesondere kann der Kunststoff Polypropylen, Polyethylen oder Polystyrol sein.

Vorzugsweise ist das vorspannende Element elastisch verformbar. Dies ermöglicht es insbesondere, dass das vorspannende Element automatisch wieder seine unkomprimierte Ausgangstellung einnimmt, wenn ein Umgebungsdruck reduziert wird. Mithin ist es also vorteilhaft, wenn das vorspannende Element reversibel komprimierbar und dekomprimierbar ausgebildet ist.

Günstig ist es, wenn sich das vorspannende Element zwischen einer Gehäusewand des Gehäuses und dem ersten Sicherungsabschnitt erstreckt. So kann sich das vorspannende Element beispielsweise an einer Gehäusewand des Gehäuses abstützen und den ersten Sicherungsabschnitt von der Gehäusewand wegbewegen oder auf diese hin, je nachdem, ob das vorspannende Element komprimiert oder dekomprimiert wird.

Vorteilhaft ist es, wenn das vorspannende Element, insbesondere mit einer ersten Verbindungsfläche, mit dem Gehäuse, insbesondere der Gehäusewand, kraft- und/oder form- und/oder stoffschlüssig verbunden ist. Auf diese Weise kann das vorspannende Element insbesondere am Gehäuse fixiert werden. So kann sich das vorspannende Element nur mit den Bereichen, die nicht mit dem Gehäuse verbunden sind, räumlich verändern. Beispielsweise kann es mit einer ersten Verbindungsfläche mit dem Gehäuse verbunden sein. Eine der ersten Verbindungsfläche gegenüberliegende Außenfläche des vorspannenden Elements kann sich dann im Falle einer Komprimierung in Richtung auf die erste Verbindungsfläche hinbewegen oder beim Dekomprimieren von dieser weg. Auf diese Weise kann das vorspannende Element einfach und sicher die Funktion einer Druckfeder ausüben.

Günstigerweise ist das vorspannende Element ausschließlich im Bereich der ersten Verbindungsfläche mit dem Gehäuse, insbesondere der Gehäusewand, verbunden. So bleibt das vorspannende Element mit der ersten Verbindungsfläche dauerhaft am Gehäuse, beispielsweise der Gehäusewand, fixiert. Andere Seiten- oder Außenflächen des vorspannenden Elements können sich bei Änderung des Umgebungsdrucks dagegen relativ zum Gehäuse bewegen. Dies ermöglicht es insbesondere, den ersten Sicherungsabschnitt beim Komprimieren und Dekomprimieren des vorspannenden Elements in gewünschter Weise relativ zum Gehäuse und insbesondere auch zur Kopplungsaufnahme zu bewegen, um beispielsweise ein in die Kopplungsaufnahme eingreifendes Verbindungselement in dieser zu sichern oder freizugeben.

Gemäß einer weiteren bevorzugten Ausführungsform der Erfindung kann vorgesehen sein, dass das vorspannende Element insbesondere mit einer zweiten Verbindungsfläche, mit dem ersten Sicherungsabschnitt kraft- und/oder form- und/oder stoffschlüssig verbunden ist. Diese Ausgestaltung ermöglicht es insbesondere, den ersten Sicherungsabschnitt dauerhaft mit dem vorspannenden Element zu verbinden, sodass dieses sowohl beim Komprimieren als auch beim Dekomprimieren zusammen mit dem vorspannenden Element, oder einer zweiten Verbindungsfläche desselben, relativ zum Gehäuse bewegt werden kann.

Vorteilhaft ist es, wenn das mindestens eine Sicherungselement in einer Sicherungselementaufnahme des Gehäuses bewegbar gehalten ist und wenn sich das vorspannende Element einerseits am Gehäuse und andererseits am ersten Sicherungsabschnitt abstützt. Diese Ausgestaltung ermöglicht es insbesondere, auf eine dauerhafte Verbindung des Sicherungselements am Gehäuse zu verzichten. Beispielsweise kann das mindestens eine Sicherungselement so den ersten Sicherungsabschnitt beim Dekomprimieren in Richtung auf die Kopplungsaufnahme hin verschieben. Die Sicherungselementaufnahme kann also insbesondere als Führung einer Bewegung sowohl des vorspannenden Elements als auch des Sicherungselements dienen. Eine besonders gute Führung kann insbesondere erreicht werden, wenn das Gehäuse eine das mindestens eine Sicherungselement begrenzende weitere Seitenwand aufweist, die der Gehäuseoberseite gegenüberliegt. Statt einer solchen Gehäusewand, also insbesondere eine Gehäuseunterseite, des Verbinders kann auch eine Seiten- oder Außenfläche einer der beiden miteinander zu verbindenden Komponenten der mechanischen Vorrichtung eine Bewegung des Sicherungselements von der Gehäuseoberseite weg verhindern. In einem solchen Fall bildet dann die Seiten- oder Außenfläche der Komponente in ihrer Funktion eine Seitenwand des Gehäuses des Verbinders. Sowohl eine Gehäuseunterseite als auch eine Seiten- oder Außenfläche einer der beiden miteinander zu verbindenden Komponenten der mechanischen Vorrichtung bilden einen Anschlag beziehungsweise Begrenzungsfläche, die eine Bewegung des Sicherungselements in Richtung der Kopplungslängsachse von der Gehäuseoberseite weg begrenzt. Dies ist insbesondere bei vorspannenden Elementen, die keine oder nur eine geringe Formstabilität aufweisen, vorteilhaft.

Günstigerweise umfasst das vorspannende Element den ersten Sicherungsabschnitt. So kann es insbesondere einstückig ausgebildet werden. Dies vereinfacht den konstruktiven Aufbau des Verbindungssystems, da beispielsweise keine kraft- und/oder form- und/oder stoffschlüssige Verbindung zwischen dem vorspannenden Element und dem ersten Sicherungsabschnitt hergestellt werden muss.

Auf einfache und kostengünstige Weise kann das Verbindungssystem ausgebildet werden, wenn das vorspannende Element einstückig, insbesondere monolithisch, mit dem ersten Sicherungsabschnitt ausgebildet ist. Beispielsweise kann das vorspannende Element zusammen mit dem ersten Sicherungsabschnitt aus einem Kunststoff durch Spritzgießen ausgebildet werden, wobei insbesondere ein Teil des vorspannenden Elements beispielsweise durch Schäumen als Schaumkörper ausgebildet werden kann.

Vorzugsweise bilden die erste Verbindungsfläche und die zweite Verbindungsfläche jeweils einen Teil einer äußeren Oberfläche des vorspannenden Elements. So lässt es sich auf einfache Weise einerseits beispielsweise mit dem Gehäuse des Verbinders, insbesondere einer Gehäusewand desselben, beziehungsweise mit dem ersten Sicherungsabschnitt verbinden.

Vorteilhaft ist es, wenn das Gehäuse eine Gehäuseoberseite definiert, welche sich quer, insbesondere senkrecht, zur Kopplungslängsachse erstreckt, und wenn in der Gehäuseoberseite eine Einführöffnung ausgebildet ist. Die EinführÖffnung kann insbesondere fluidwirksam mit der Kopplungsaufnahme verbunden sein, sodass durch die Einführöffnung ein Verbindungselement in die Kopplungsaufnahme einführbar ist. Die Gehäuseoberseite ermöglicht zudem eine stabile Ausgestaltung des Verbinders. Insbesondere kann sie auch als Abstützfläche für eine von zwei miteinander zu verbindenden Komponenten dienen.

Vorzugsweise weist Einführöffnung eine unrunde, von einer Kreisform abweichende Querschnittsform auf. Dies ermöglicht es insbesondere, ein Verbindungselement nach Art des Schlüssel-Schlüsselloch-Prinzips nur in einer definierten Drehstellung bezogen auf die Kopplungslängsachse in die Kopplungsaufnahme einzuführen und durch Verdrehen um die Kopplungslängsachse in der Kopplungsaufnahme zumindest temporär gegen ein Herausfallen zu sichern.

Günstig ist es, wenn die Kopplungsaufnahme die Form eines senkrechten Hohlzylinders aufweist mit einer der Einführöffnung entsprechenden Querschnittsfläche. Die Querschnittsfläche kann beispielsweise kreisförmig sein, sodass die Kopplungsaufnahme die Form eines senkrechten kreisförmigen Hohlzylinders aufweist.

Ferner kann es vorteilhaft sein, wenn eine der Gehäuseoberseite gegenüberliegende Gehäuseunterseite ein Spannglied umfasst oder als Spannglied ausgebildet ist, welches in einer Richtung von der Gehäuseoberseite weg entgegen einer vom Spannglied ausgeübten Rückstellkraft auslenkbar ist. Insbesondere kann das Spannglied in einer Gehäuseunterseitenöffnung der Gehäuseunterseite angeordnet oder ausgebildet ist. Eine solche Ausgestaltung ermöglicht es insbesondere, ein in die Kopplungsaufnahme eingesetztes Verbindungselement zusätzlich mit dem Spannglied zu sichern. Beispielsweise kann ein freies Ende des Verbindungselements mit dem Spannglied derart zusammenwirken, dass das Spannglied in einer Spannstellung auf das Verbindungselement eine in Richtung auf die Gehäuseoberseite hin gerichtete Rückstellkraft ausübt, wenn das Spannglied von der Gehäuseoberseite weg ausgelenkt wird. Dies ermöglicht es insbesondere, das Verbindungselement klemmend gegen den mindestens einen ersten Sicherungsabschnitt zu drücken, um ein außer Eingriff Bringen derselben zu erschweren.

Günstig ist es, wenn das Spannglied das Gehäuse auf der Gehäuseunterseite mindestens teilweise, insbesondere vollständig, verschließt. Insbesondere kann das Spannglied die Gehäuseunterseitenöffnung mindestens teilweise, insbesondere vollständig, verschließen. Dies ermöglicht insbesondere einen einfachen Aufbau des Verbinders, denn die Gehäuseunterseite kann dann beispielsweise mit einer Gehäuseunterseitenwand verschlossen werden, die durch das Spannglied gebildet wird. Das Spannglied kann insbesondere auch nur eine Gehäuseunterseitenöffnung ganz oder teilweise verschließen, welche in einer Gehäuseunterseite, die durch eine weitere Gehäusewand gebildet wird, ausgebildet sein kann. Das Spannglied kann beispielsweise in die Gehäuseunterseitenöffnung eingesetzt oder an diese angespritzt sein und diese so ganz oder vollständig verschließen. Auf diese Weise kann das Spannglied im Zusammenwirken mit einem freien Ende eines Verbindungselements, welches in die Kopplungsaufnahme eingesetzt ist, eine Bewegung desselben in Richtung auf die Gehäuseunterseite hin begrenzen, bildet also einen Anschlag für das Verbindungselement. Wird das Spannglied aus einer Grundstellung ausgelenkt, übt es eine rückstellende Kraft auf das Verbindungselement aus und hält es in einer gewünschten Position. Insbesondere kann so ein Formschluss zwischen dem Verbindungselement und dem mindestens einen ersten Sicherungsabschnitt in der Sicherungsstellung gesichert werden. Das Spannglied hält dann beispielsweise die Rastflächen des Verbindungselements gegen die Rückhalteflächen des mindestens einen ersten Sicherungsabschnitts vorgespannt. Dadurch wird die Sicherungsstellung zusätzlich gesichert.

Gemäß einer weiteren bevorzugten Ausführungsform der Erfindung kann vorgesehen sein, dass am ersten Sicherungsabschnitt mindestens ein Rückhalteglied angeordnet oder ausgebildet ist, welches eine quer, insbesondere senkrecht, zur Kopplungslängsachse verlaufende Rückhaltefläche aufweist. Die Rückhaltefläche kann insbesondere von der Gehäuseoberseite weg weisen und so mit einer in Richtung auf die Gehäuseoberseite hin weisenden Rückhaltefläche am Verbindungselement in der Sicherungsstellung zusammenwirken, indem diese aneinander anliegen und so eine Bewegung des Verbindungselements aus der Kopplungsaufnahme heraus in Richtung auf die Gehäuseoberseite verhindern.

Auf einfache Weise lässt sich der Verbinder gestalten, wenn das mindestens eine Rückhalteglied in Form eines Rückhaltevorsprungs oder in Form einer Rückhalteausnehmung ausgebildet ist.

Günstig ist es, wenn das mindestens eine Rückhalteglied eine geneigte, in Richtung auf die Kopplungslängsachse und die Einführöffnung weisende geneigte erste Aufgleitfläche umfasst. Eine solche erste Aufgleitfläche ermöglicht es insbesondere, ein Verbindungselement in die Kopplungsaufnahme einzuführen und beim Vorschieben desselben in die Kopplungsaufnahme hinein beim Aufgleiten an der ersten Aufgleitfläche das vorspannende Element mechanisch, also ohne Änderung eines Umgebungsdrucks, temporär zu komprimieren. So kann das Verbindungselement auf einfache Weise mit dem Verbinder beim Einführen in die Kopplungsaufnahme verrastet werden.

Grundsätzlich ist es möglich, das Gehäuse mit einer der zwei miteinander zu verbindenden Komponenten stoffschlüssig zu verbinden, beispielsweis durch Kleben oder Schweißen. Das Gehäuse bleibt dann dauerhaft mit der jeweiligen Komponente verbunden. Vorteilhaft kann es aber auch sein, wenn am Gehäuse, insbesondere einer Gehäuseaußenseite, mindestens ein erstes Kupplungsglied angeordnet oder ausgebildet ist zum kraft- und/oder formschlüssigen in Eingriff Bringen mit mindestens einem korrespondierend ausgebildetem zweiten Kupplungsglied an einer ersten, mit einer zweiten Komponente zu verbindenden Komponente. Diese Ausgestaltung ermöglicht es insbesondere, den Verbinder an einer Komponente, die mit einer weiteren Komponente verbunden werden soll, festzulegen, nämlich kraft- und/oder formschlüssig. Hierfür werden keine zusätzlichen Werkzeuge benötigt. Beispielsweise kann das Gehäuse insgesamt in eine Aufnahme an einer der miteinander zu verbindenden Komponenten eingeschoben oder klemmend mit dieser verbunden werden. Dies gestattet es gegebenenfalls auch, den Verbinder wieder von der Komponente zu lösen, falls dies gewünscht sein sollte.

Auf einfache Weise lässt sich der Verbinder mit einer der Komponenten koppeln, wenn das mindestens eine erste Kupplungsglied in Form eines Kupplungsvorsprungs oder in Form einer Kupplungsausnehmung ausgebildet ist. Es kann dann mit einem korrespondierenden zweiten Kupplungsglied auf einfache Weise kraft- und/oder formschlüssig in Eingriff gebracht werden.

Auf sichere und einfache Weise kann der Verbinder an einer Komponente gesichert werden, die mit einer weiteren Komponente verbunden werden soll, wenn am Gehäuse zwei erste Kupplungsglieder angeordnet oder ausgebildet sind an in diametraler Richtung voneinander weg weisenden Gehäuseseitenflächen, welche sich quer, insbesondere senkrecht, zur Gehäuseoberseite erstrecken. Dies ermöglicht es insbesondere, das Gehäuse parallel zur Gehäuseoberseite in entsprechende Kupplungsausnehmungen an der Komponente einzuschieben.

Einfach und kompakt lässt sich das Verbindungssystem ausbilden, wenn das Gehäuse quaderförmig oder im Wesentlichen quaderförmig ausgebildet ist.

Vorteilhaft ist es, wenn das Gehäuse an der ersten, mit einer zweiten Komponente zu verbindenden Komponente angeordnet oder ausgebildet ist. Insbesondere kann es einstückig, weiter insbesondere monolithisch, mit der ersten Komponente verbunden sein. Dies vereinfacht insbesondere eine Verbindung von zwei Komponenten miteinander, da dann ein Anwender den Verbinder nicht zunächst mit einer der beiden Komponenten koppeln oder verbinden muss, sondern direkt die zwei Komponenten miteinander verbinden kann.

Gemäß einer weiteren bevorzugten Form der Erfindung kann vorgesehen sein, dass das Verbindungssystem ein vom Gehäuse separat ausgebildetes Verbindungselement umfasst mit einem Kopplungsabschnitt, welcher in die Kopplungsaufnahme einführbar und mit dem ersten Sicherungsabschnitt kraft- und/oder formschlüssig in Eingriff bringbar ist, insbesondere in der Sicherungsstellung. Mit einem derartigen Verbindungselement ist es insbesondere möglich, zwei Komponenten miteinander zu verbinden, welche jeweils eine Öffnung für das Verbindungselement aufweisen, sodass das Verbindungselement diese beiden Öffnungen durchsetzen und dann mit dem Kopplungsabschnitt mit dem Verbinder in Eingriff gebracht werden kann. So lassen sich die zwei Komponenten auf einfache Weise mit dem Verbindungssystem umfassend ein Verbindungselement und einen Verbinder miteinander klemmend verbinden.

Auf einfache Weise lassen sich zwei Komponenten miteinander verbinden, wenn das Verbindungselement an der zweiten, mit der ersten zu verbindenden Komponente angeordnet oder ausgebildet ist. Insbesondere kann es mit der zweiten Komponente einstückig, weiter insbesondere monolithisch, ausgebildet sein. So lässt sich insbesondere eine Montage von zwei miteinander zu verbindenden Komponenten vereinfachen. Beispielsweise kann an einer Komponente das Verbindungselement angeordnet oder ausgebildet sein und an der anderen Komponente der Verbinder. So müssen nur das Verbindungselement und der Verbinder miteinander in Eingriff gebracht werden. Eine Montage des Verbindungselements und des Verbinders an den beiden Komponenten ist dann nicht erforderlich. Dies spart Arbeitsschritte und somit Zeit beim Verbinden der Komponenten.

Vorteilhaft ist es, wenn an einem Ende des Kopplungsabschnitt eins sich quer zur Kopplungslängsachse erstreckender Rückhalteabschnitt angeordnet oder ausgebildet ist. Ein solcher Rückhalteabschnitt kann nach Art eines Kopfes, wie beispielsweise an einem Nagel oder einer Schraube, ausgebildet sein und insbesondere seitlich, also quer zur Kopplungslängsachse über den Kopplungsabschnitt vorstehen. Eine solche Ausgestaltung ermöglicht es insbesondere, ähnlich wie bei einer Schraube-Mutter-Verbindung, eine, zwei oder mehrere Komponenten zwischen dem Rückhalteabschnitt und dem Verbinder anzuordnen und klemmend zu halten.

Vorzugsweise ist zwischen dem Rückhalteabschnitt und dem Gehäuse in der Sicherungsstellung eine Hinterschneidung definiert. In dieser können Bereiche der ersten und/oder zweiten Komponente eingreifen, sodass sie klemmend zwischen dem Rückhalteabschnitt und dem Gehäuse in der Sicherungsstellung gehalten werden können.

Günstigerweise ist die Hinterschneidung von der Gehäuseoberseite und von einer auf die Gehäuseoberseite hin weisenden Rückhalteabschnittsfläche begrenzt. Die Rückhalteabschnittsfläche kann insbesondere ringförmig ausgebildet sein und beispielsweise eine Ebene definieren, die sich quer, insbesondere senkrecht zur Kopplungslängsachse erstreckt.

Günstig ist es, wenn an mindestens einem Ende des Verbindungselements ein von diesem und in Richtung der Kopplungslängsachse weg weisendes Werkzeugkupplungsglied angeordnet oder ausgebildet ist zum formschlüssigen in Eingriff Bringen mit einem Eindrehwerkzeug. Ein solches Werkzeugkupplungsglied ermöglicht es einem Anwender insbesondere, das Verbindungselement auf einfache Weise mit einem Eindrehwerkzeug um die Kopplungslängsachse zu verdrehen. Dies kann beispielsweise genutzt werden, um eine Verbindung zwischen dem Verbindungselement und dem Verbinder zu lösen, beispielsweise durch Überführen des vorspannenden Elements von einer unkomprimierten oder teilkomprimierten Ausgangsstellung in eine komprimierte Druckstellung, und zwar ohne Änderung eines Umgebungsdrucks. So kann also beispielsweise ein Gehäuse zu Reparaturzwecken geöffnet werden, auch wenn keine Druckkammer zur Verfügung steht.

Auf einfache Weise lässt sich das Verbindungssystem realisieren, wenn das Werkzeugkupplungsglied in Form eines Werkzeugvorsprungs oder einer Werkzeugaufnahme ausgebildet ist. Insbesondere eine Werkzeugaufnahme lässt sich auf einfache Weise mit herkömmlichen Eindrehwerkzeugen in Eingriff bringen, beispielsweise Schraubendrehern, Inbusschlüsseln oder dergleichen.

Das Werkzeugkupplungsglied lässt sich auf einfache Weise ausblinden, wenn die Werkzeugaufnahme in Form eines Schlitzes, eines Innenmehrkant oder eines Innenvielrund ausgebildet ist.

Ferner kann es vorteilhaft sein, wenn der Kopplungsabschnitt des Verbindungselements einen sich längs seiner Erstreckung quer zur Kopplungslängsachse unrunden, insbesondere sich ändernden, Querschnitt aufweist. Auf diese Weise lässt sich insbesondere eine äußere Kontur des Verbindungselements in unterschiedlichen Arten und Weisen realisieren. Beispielsweise können so auf einfache Weise Rastglieder am Kopplungsabschnitt ausgebildet werden, die in der Sicherungsstellung mit dem ersten Sicherungsabschnitt des Verbinders zusammenwirken. Ein unrunder Querschnitt ermöglicht es zudem, Außenflächen des Verbindungselements in unterschiedlichen Drehrichtungen unterschiedlich zu gestalten, sodass abhängig von einer Drehstellung ein kraft- und/oder formschlüssiger Eingriff zwischen dem ersten Sicherungsabschnitt und dem Verbindungselement ermöglicht wird, in einer anderen Drehstellung dagegen nicht. Dies gestattet es beispielsweise, das Verbindungselement in der Kopplungsaufnahme durch Verdrehen in gezielter Weise mit dem ersten Sicherungsabschnitt formschlüssig in Eingriff oder außer Eingriff zu bringen, um das Verbindungselement wahlweise aus der Kopplungsaufnahme herausziehen oder in dieser sichern zu können.

Günstig ist es, wenn der Kopplungsabschnitt mindestens einen Gleitflächenabschnitt, insbesondere zwei einander diametral gegenüberliegende Gleitflächenabschnitte aufweist. Die Gleitflächenabschnitte können insbesondere mit dem ersten Sicherungsabschnitt derart zusammenwirken, dass das Verbindungselement parallel zur Kopplungslängsachse in zwei voneinander entgegengesetzte Richtungen relativ zum ersten Sicherungsabschnitt bewegbar ist. Die Gleitflächenabschnitte sind also insbesondere mit dem ersten Sicherungsabschnitt nicht formschlüssig in Eingriff bringbar, sodass eine Bewegung des Verbindungselements parallel zur Kopplungslängsachse relativ zum ersten Sicherungsabschnitt möglich ist.

Vorteilhaft ist es, wenn der mindestens eine Gleitflächenabschnitt parallel zur Kopplungslängsachse verläuft oder ausgehend von einem freien Ende des Kopplungsabschnitts mit der Kopplungslängsachse einen Öffnungswinkel einschließt. Derartige Gleitflächenabschnitte ermöglichen insbesondere ein einfaches Einführen eines Verbindungselement in eine Kopplungsaufnahme des Verbinders. Insbesondere kann ein freies Ende des Kopplungsabschnitts kegelförmig oder kegelstumpfförmig ausgebildet sein.

Günstig ist es, wenn am Kopplungsabschnitt mindestens ein Rastglied angeordnet oder ausgebildet ist, welches mit dem mindestens einen Rückhalteglied in der Sicherungsstellung in Eingriff steht. Dies ermöglicht auf einfache Weise eine kraft- und/oder formschlüssige Sicherung des Verbindungselements in der Kopplungsaufnahme mit dem ersten Sicherungsabschnitt.

Auf einfache Weise lässt sich das Verbindungssystem ausbilden, wenn mindestens eine Rastglied in Form eines Rastvorsprungs oder einer Rastausnehmung ausgebildet ist.

Günstig ist es, wenn ein erster Abstand des mindestens einen Gleitflächenabschnitts von der Kopplungslängsachse in radialer Richtung größer ist als ein zweiter Abstand eines freien, von der Kopplungslängsachse in radialer Richtung weg weisenden Endes des mindestens einen Rastglieds von der Kopplungslängsachse. Eine solche Ausgestaltung ermöglicht es beispielsweise, das Verbindungselement in der Kopplungsaufnahme zu drehen, und zwar derart, dass entweder der mindestens eine Gleitflächenabschnitt mit dem ersten Sicherungsabschnitt zusammenwirkt oder das mindestens eine Rastglied. Durch die Wahl der Abstände in der angegebenen Weise kann beim Verdrehen derart, dass der mindestens eine Gleitflächenabschnitt mit dem ersten Sicherungsabschnitt zusammenwirkt, durch das Verdrehen des Verbindungselements das vorspannende Element mechanisch, also ohne Änderung eines Umgebungsdrucks, komprimiert werden, sodass das mindestens eines Rastglied und das mindestens eine Rückhalteglied außer Eingriff gelangen, also insbesondere ein zuvor hergestellter Formschluss aufgehoben wird. Dies ermöglicht es insbesondere, das Verbindungselement in der beschriebenen Stellung aus der Kopplungsaufnahme herauszuziehen.

Vorteilhaft ist es, wenn eine erste, die Kopplungslängsachse enthaltende Symmetrieebene des mindestens einen Gleitflächenabschnitts in Umfangsrichtung bezogen auf eine zweite, die Kopplungslängsachse enthaltende Symmetrieebene des mindestens einen Rastglieds zwischen sich einen Lösewinkel einschließen. Durch diese einfache Ausgestaltung des Verbindungselements kann insbesondere ein Lösewinkel definiert werden, um den das Verbindungselement bezogen auf die Kopplungslängsachse beispielsweise gedreht werden muss, um den ersten Sicherungsabschnitt entweder mit dem Gleitflächenabschnitten in Eingriff zu bringen oder mit dem Rückhalteglied. So kann auf einfache Weise vorgegeben werden, um welchen Winkel das Verbindungselement gedreht werden muss, um es von der Sicherungsstellung in die Freigabestellung durch mechanischen Eingriff zu überführen.

Günstigerweise liegt der Lösewinkel in einem Bereich von 80° bis etwa 220°. Insbesondere kann er in einem Bereich von etwa 80° bis etwa 110° oder in einem Bereich von etwa 140° bis etwa 220° liegen, weiter insbesondere beträgt etwa 90° oder etwa 180°. Sind beispielsweise zwei vorspannende Elemente am Verbinder vorgesehen, liegt der Lösewinkel insbesondere in einem Bereich von etwa 80° bis etwa 110°. Ist nur ein einziges vorspannendes Element vorgesehen, kann der Lösewinkel beispielsweise in einem Bereich von etwa 80° bis etwa 220° liegen, insbesondere in einem Bereich von etwa 140° bis etwa 220° liegen.

Um ein mechanisches Lösen des Verbindungselements und des Verbinders auf einfache Weise zu realisieren, ist es günstig, wenn sich das mindestens eine Rastglied in Umfangsrichtung bezogen auf die Kopplungslängsachse über einen Umfangswinkel in einem Bereich von etwa 100° bis etwa 175° erstreckt. Über diesen Bereich kann dann ein Eingriff zwischen dem Sicherungsabschnitt und dem Verbindungselement in der Sicherungsstellung erreicht werden. Durch entsprechendes Verdrehen des Verbindungselements in der Kopplungsaufnahme kann dann das vorspannende Element von der Sicherungsstellung in die Freigabestellung bewegt werden. Das Verbindungselement dient hierbei als eine Art Exzenter.

Vorteilhaft ist es, wenn das Verbindungselement relativ zum Gehäuse ausgehend von der Sicherungsstellung in eine Lösestellung, in welcher der mindestens eine Gleitflächenabschnitt am ersten Sicherungsabschnitt anliegt, verdrehbar ist, insbesondere um den Lösewinkel. Diese Ausgestaltung ermöglicht es insbesondere, wie bereits angedeutet, durch Verdrehen des Verbindungselements das vorspannende Element zu komprimieren, um das Verbindungselement freizugeben und ein Herausziehen aus der Kopplungsaufnahme zu ermöglichen.

Günstig ist es, wenn das mindestens eine Rastglied eine sich quer, insbesondere senkrecht, zur Kopplungslängsachse erstreckende Rastfläche aufweist, welche in der Sicherungsstellung an der Rückhaltefläche des mindestens einen Rückhalteglieds anliegt. Diese Ausgestaltung ermöglicht auf einfache Weise eine formschlüssige Verbindung des Verbindungselements mit dem ersten Sicherungsabschnitt in der Sicherungsstellung.

Ferner kann es vorteilhaft sein, wenn das mindestens eine Rastglied und/oder ein freies Ende des Kopplungsabschnitts eine geneigte, von der Kopplungslängsachse und der Einführöffnung weg weisende geneigte zweite Aufgleitfläche umfasst, welche beim Einführen des Verbindungselements in die Kopplungsaufnahme am ersten Sicherungsabschnitt aufgleitet und diesen dabei entgegen der Wirkung des vorspannenden Elements von der Kopplungslängsachse weg bewegt. Eine solche zweite Aufgleitfläche ermöglicht also insbesondere ein einfaches Einführen des Verbindungselements in die Kopplungsaufnahme. Es erfolgt dabei ein einfaches Verrasten des Verbindungselements mit dem ersten Sicherungsabschnitt. Sind mehrere Rückhalteglieder und Rastglieder vorgesehen, kann eine sukzessives Verrasten beim Hineinbewegen des Verbindungselements in die Kopplungsaufnahme erfolgen.

Gemäß einer weiteren bevorzugten Ausführungsform der Erfindung kann vorgesehen sein, dass das Verbindungssystem eine Druckkammer mit einem mit einem kompressiblen Fluid befüllten Druckkammerraum zum Aufnehmen einer mit dem Verbindungssystem verbundenen ersten und zweiten Komponente und eine Druckerzeugungseinrichtung umfasst zum Erhöhen eines Fluiddrucks im Druckkammerraum gegenüber einem Umgebungsdruck der Druckkammer. Wie bereits erläutert ist es mit einer solchen Druckkammer möglich, allein durch Erhöhen des Drucks in der Druckkammer das vorspannende Element am Verbinder zu komprimieren, sodass der erste Sicherungsabschnitt die Kopplungsaufnahme derart freigibt, dass das in dieser aufgenommene Verbindungselement aus der Kopplungsaufnahme entfernt werden kann, ohne dass der erste Sicherungsabschnitt dabei Kräfte auf das Verbindungselement ausübt. So lässt sich das Verbindungssystem auf einfache Weise automatisch lösen. Geräte oder Gehäuse können ohne einen Einsatz anderer Werkzeuge zerlegt werden.

Die eingangs gestellte Aufgabe wird ferner bei einer mechanischen Vorrichtung der eingangs beschriebenen Art erfindungsgemäß dadurch gelöst, dass die erste Komponente und die zweite Komponente mit einem der oben beschriebenen erfindungsgemäßen Verdingungssysteme miteinander verbunden sind.

Eine solche mechanische Vorrichtung kann dann wie beschrieben durch Änderung eines Umgebungsdrucks automatisch zerlegt werden durch Trennen der miteinander verbundenen Komponenten.

Günstig ist es, wenn die mechanische Vorrichtung in Form eines Gerätegehäuses mit einer Gehäusewanne und einem Gehäusedeckel zum Verschließen der Gehäusewanne ausgebildet ist, wenn die Gehäusewanne die erste Komponente bildet und wenn der Gehäusedeckel die zweite Komponente bildet. Derartige Gerätegehäuse können also mit dem vorgeschlagenen Verbindungssystem auf einfache Weise miteinander verbunden und dann insbesondere auch ohne Einsatz von Werkzeugen durch Erhöhen eines Umgebungsdrucks voneinander gelöst werden.

Vorzugsweise ist das Gerätegehäuse in Form eines Gerätegehäuses eines Elektrogeräts ausgebildet. Dies ermöglicht es insbesondere, Elektrogeräte, beispielsweise Lautsprecher, Küchengeräte, batteriebetriebene Handwerkzeuge oder dergleichen, mit Gehäusen auszustatten, die mit dem vorgeschlagenen Verbindungssystem zusammengehalten werden. Das Zerlegen derartiger Elektrogeräte wird dann in der beschriebenen Weise ermöglicht und somit besonders einfach.

Die eingangs gestellte Aufgabe wird ferner bei einem Verfahren der eingangs beschriebenen Art erfindungsgemäß dadurch gelöst, dass die erste Komponente und die zweite Komponente mit einem der oben beschriebenen vorteilhaften Verbindungssysteme miteinander verbunden sind, dass die miteinander verbundenen ersten und zweiten Komponenten bei Atmosphärendruck in einen Druckkammerraum einer Druckkammer eingebracht werden, dass die Drucckammer geschlossen und der Druck in der Kammer erhöht wird zum Überführen des vorspannenden Elements von der Ausgangsstellung in die Druckstellung.

Ein derart weitergebildetes Verfahren ermöglicht auf einfache Weise das Zerlegen von mechanischen Vorrichtungen, insbesondere Gerätegehäusen von Elektrogeräten, und zwar ohne Einsatz jedweder Art von Werkzeugen.

Um das Lösen der miteinander verbundenen Komponenten zu erleichtern, ist es vorteilhaft, wenn zum Lösen des Verbindungselements vom Verbinder die Druckkammer bewegt, insbesondere geschüttelt, wird. Durch dieses Vorgehen kann das Verbindungselement in der Freigabestellung des vorspannenden Elements des Verbinders aus der Kopplungsaufnahme herausfallen.

Ferner wird die Verwendung einer Druckkammer mit einem mit einem kompressiblen Fluid befüllten Druckkammerraum und einer Druckerzeugungseinrichtung zum Erhöhen eines Fluiddrucks im Druckkammerraum gegenüber einem Umgebungsdruck der Druckkammer zur Durchführung eines des oben beschriebenen erfindungsgemäßen Verfahren vorgeschlagen.

Die nachfolgende Beschreibung bevorzugter Ausführungsformen der Erfindung dient im Zusammenhang mit den Zeichnungen der näheren Erläuterung. Es zeigen:
- Figur 1:: eine schematische Schnittansicht einer mechanischen Vorrichtung, die im Druckkammerraum einer Druckkammer aufgenommen ist, bei in der Druckkammer herrschendem Normaldruck;
- Figur 2:: eine Anordnung analog Figur 1, jedoch bei einem im Druckkammerraum herrschenden Überdruck gegenüber einer Umgebung der Druckkammer;
- Figur 3:: eine vergrößerte Teilansicht des Bereichs A in Figur 1;
- Figur 4:: eine vergrößerte Teilansicht des Bereichs B aus Figur 2;
- Figur 5:: eine schematische, perspektivische, teilweise durchbrochene Ansicht eines Verbinders eines Verbindungssystems beim Einführen eines Verbindungselements in die Kopplungsaufnahme des Verbinders;
- Figur 6:: eine Explosionsdarstellung der Anordnung aus Figur 5;
- Figur 7:: eine Anordnung ähnlich Figur 5, jedoch mit relativ zum Verbinder verdrehtem Verbindungselement;
- Figur 8:: eine Schnittansicht längs Linie 8-8 in Figur 7;
- Figur 9:: eine Ansicht ähnlich Figur 5 eines weiteren Ausführungsbeispiels eines Verbinders mit zugehörigem Verbindungselement;
- Figur 10:: eine Schnittansicht längs Linie 10-10 in Figur 9;
- Figur 11:: eine Schnittansicht längs Linie 11-11 in Figur 10;
- Figur 12:: eine Schnittansicht ähnlich Figur 10, jedoch mit dem vorspannenden Element in der Freigabestellung;
- Figur 13:: eine Ansicht ähnlich Figur 9 eines weiteren Ausführungsbeispiels eines Verbinders mit zugehörigem Verbindungselement;
- Figur 14:: eine Schnittansicht längs Linie 14-14 in Figur 13;
- Figur 15:: eine Schnittansicht ähnlich Figur 14, jedoch mit vorspannendem Element in der Freigabestellung;
- Figur 16:: eine Schnittansicht längs Linie 16-16 in Figur 15;
- Figur 17:: eine Schnittansicht ähnlich Figur 16, jedoch mit einem um 90° verdrehten Verbindungselement;
- Figur 18:: eine Seitenansicht eines weiteren Ausführungsbeispiels eines Verbindungselements;
- Figur 19:: eine Seitenansicht eines weiteren Ausführungsbeispiels eines Verbindungelements;
- Figur 20:: eine vergrößerte Teilansicht ähnlich Figur 3 mit einem weiteren Ausführungsbeispiel eines Verbinders;
- Figur 21:: eine Ansicht ähnlich Figur 20 eines weiteren Ausführungsbeispiels eines Verbinders; und
- Figur 22:: eine Ansicht ähnlich Figur 3, mit einer aus einem komprimierbaren Material ausgebildeten zweiten Gehäusekomponente.

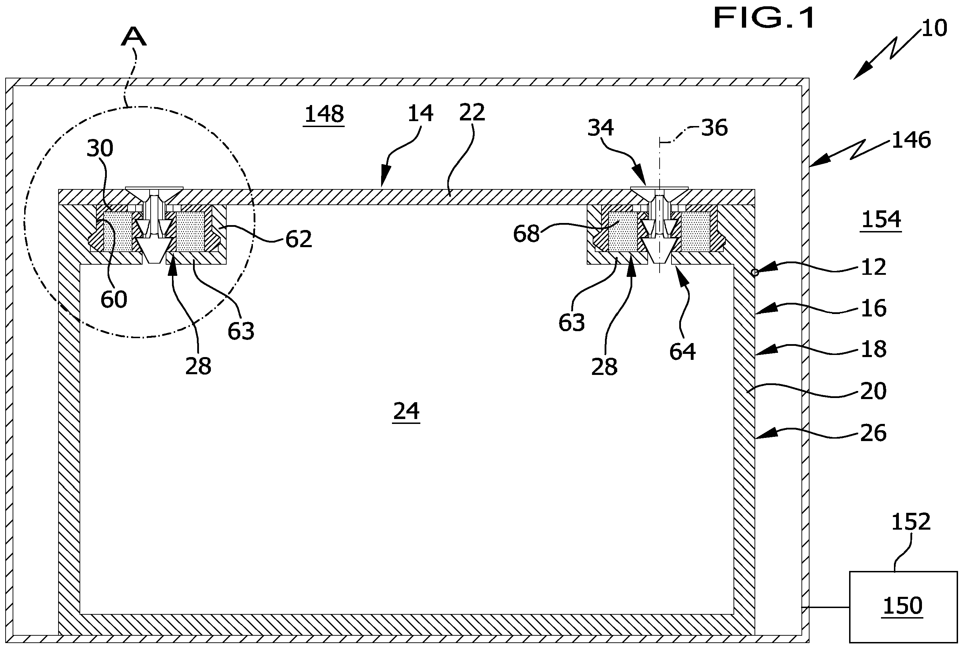

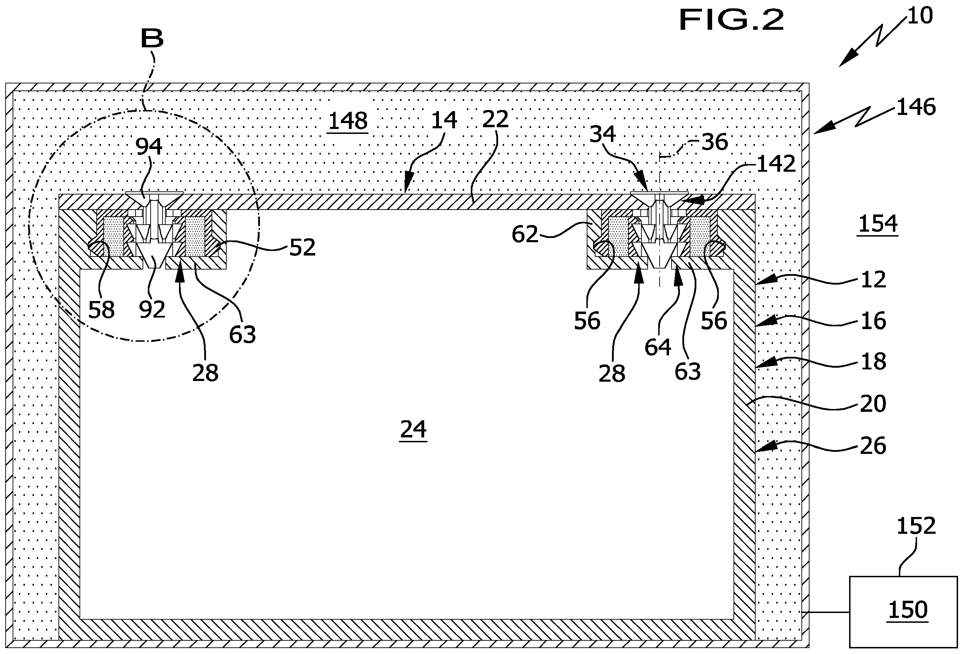

In den Figuren 1 und 2 ist schematisch ein Ausführungsbeispiel eines insgesamt mit dem Bezugszeichen 10 bezeichneten Verbindungssystems dargestellt. Es dient zum kraft- und/oder formschlüssigen Verbinden einer ersten Komponente 12 und einer oder mehrerer zweiter Komponenten 14.

Die beiden Komponenten 12 und 14 sind Teil einer mechanischen Vorrichtung 16, welche in den Figuren 1 und 2 beispielhaft als Gerätegehäuse 18 dargestellt ist. Das Gerätegehäuse 18 umfasst eine Gerätewanne 20 und einen Gehäusedeckel 22 zum Verschließen der Gehäusewanne 20, welche einen Aufnahmeraum 24 definiert. Bei diesem Ausführungsbeispiel bildet die Gehäusewanne 20 die erste Komponente 12. Der Gehäusedeckel 22 bildet die zweite Komponente 14.

Das schematisch in den Figuren 1 und 2 dargestellte Gerätegehäuse 18 ist bei einem Ausführungsbeispiel als Gerätegehäuse eines Elektrogeräts 26 ausgebildet. Ein solches Elektrogerät 26 kann beispielsweise ein Lautsprecher oder ein elektrisches Handwerkzeug, welches netzunabhängig mit einer Batterie oder aber auch netzabhängig betrieben werden kann, oder ein anderes, ein Gehäuse umfassendes Elektrogerät sein.

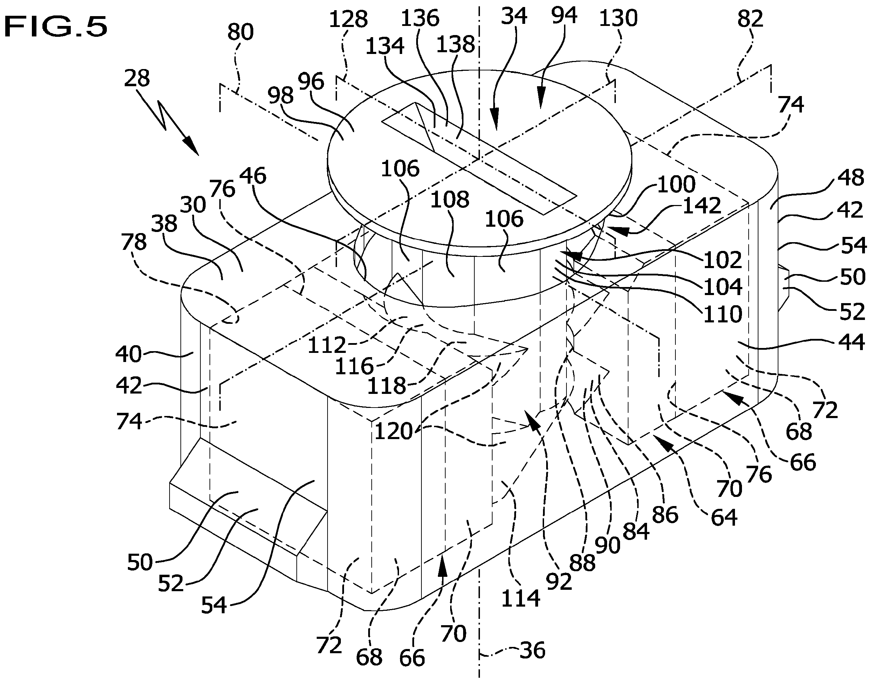

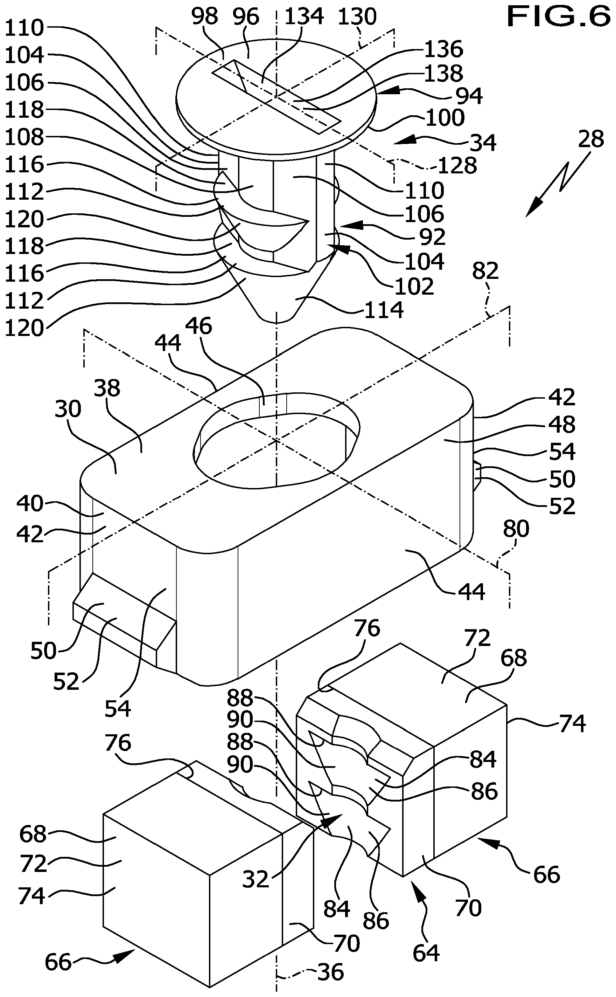

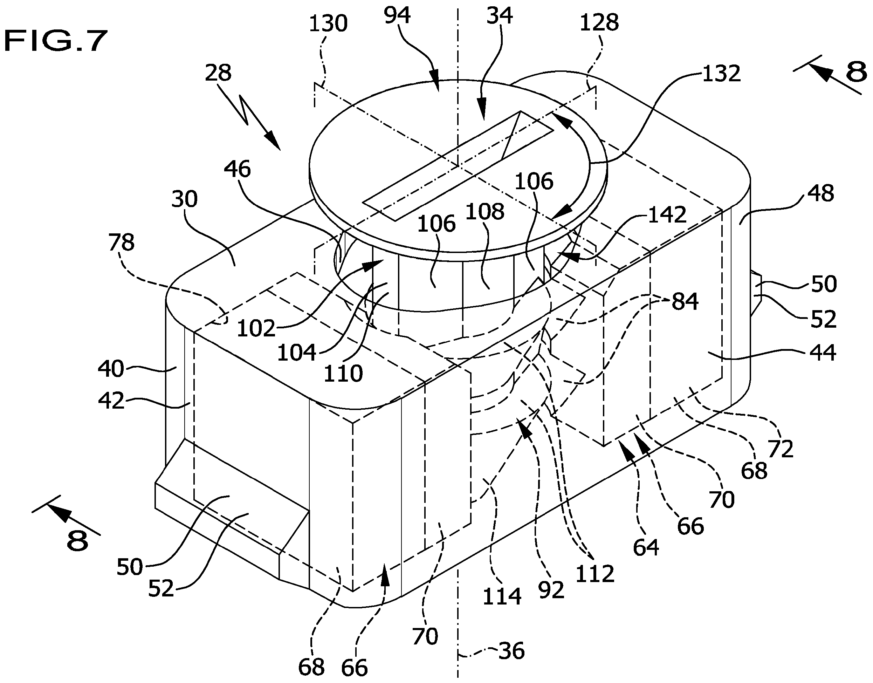

Das Verbindungssystem 10 dient zum kraft- und/oder formschlüssigen Verbinden der beiden Komponenten 12 und 14 miteinander. Zu diesem Zweck umfasst das Verbindungssystem 10 einen Verbinder 28. Ein erstes Ausführungsbeispiel des Verbinders 28 ist schematisch in den Figuren 1 bis 8 dargestellt. Der Aufbau des Verbinders 28 wird nachfolgend in Verbindung insbesondere mit den Figuren 5 bis 8 näher erläutert.

Der Verbinder 28 umfasst ein Gehäuse 30. Im Gehäuse 30 ist eine Kopplungsaufnahme zum Aufnehmen eines Verbindungselements 34 ausgebildet. Die Kopplungsaufnahme 32 definiert eine Kopplungslängsachse 36.

Das Gehäuse 30 ist bei dem in den Figuren 1 bis 8 schematisch dargestellten Ausführungsbeispiel quaderförmig beziehungsweise im Wesentlichen quaderförmig ausgebildet. Es definiert eine Gehäuseoberseite 38, von welcher parallel zur Kopplungslängsachse 36 eine umlaufende Gehäusewand 40 absteht. Die Gehäusewand 40 umfasst zwei parallel zueinander verlaufende Stirnwände 42 sowie zwei parallel zueinander verlaufende, die Stirnwände 42 miteinander verbindende Seitenwände 44. Die Stirnwände 42 und die Seitenwände 44 sind durchbrechungsfrei ausgebildet.

Das Gehäuse 30 ist der Gehäuseoberseite 38 gegenüberliegend offen. Mithin weist es also keine Gehäuseunterseite auf.

In der Gehäuseoberseite 40 ist eine Einführöffnung 46 ausgebildet. Die Gehäuseoberseite 38 erstreckt sich quer, nämlich senkrecht, zur Kopplungslängsachse 36.

Die Einführöffnung 46 weist bei dem in den Figuren 1 bis 8 schematisch dargestellten Ausführungsbeispiel eine unrunde Querschnittsform auf. Sie weicht mithin von einer Kreisform ab und ist im Wesentlichen oval geformt.

Die Kopplungsaufnahme 32 weist die Form eines senkrechten Hohlzylinders auf mit einer der Einführöffnung 46 entsprechenden Querschnittsfläche.

Bei dem Ausführungsbeispiel der Figuren 1 bis 8 ist am Gehäuse 30, nämlich auf einer Gehäuseaußenseite 48, ein erstes Kupplungsglied 50 angeordnet beziehungsweise ausgebildet. Bei dem Ausführungsbeispiel der Figuren 1 bis 8 sind zwei erste Kupplungsglieder 50 ausgebildet, und zwar in Form von Kupplungsvorsprüngen 52, die rippenartig von den Stirnwänden 42 abstehend ausgebildet sind und in diametraler Richtung voneinander weg weisen. Die rippenartigen Kupplungsvorsprünge 52 erstrecken sich in einer Richtung parallel zu einer von der Gehäuseoberseite 38 definierten Ebene und damit senkrecht zur Kopplungslängsachse. Sie stehen von äußeren Gehäuseseitenflächen 54 der Stirnwände 42 vor.

Die ersten Kupplungsglieder 50 dienen zum kraft- und/oder formschlüssigen in Eingriff Bringen mit mindestens einem zu diesen korrespondierend ausgebildete zweiten Kupplungsglied 56 an der ersten Komponente 12. Die zweiten Kupplungsglieder 56 sind in Form von Kupplungsausnehmungen 58 ausgebildet zum formschlüssigen oder zumindest teilweise formschlüssigen Aufnehmen der ersten Kupplungsglieder 50. Dies ist schematisch in den Figuren 1 bis 4 dargestellt.

Die zweiten Kupplungsglieder 56 sind an einer Gehäuseaufnahme 60 an der ersten Komponente 12 ausgebildet. Die Gehäuseaufnahme 60 ist von einem umlaufenden Rahmen 62 begrenzt. Die Gehäuseaufnahme 60 ist korrespondierend zum Gehäuse 30 ausgebildet, sodass dieses formschlüssig in die Gehäuseaufnahme 60 eingesetzt werden kann, wie dies in den Figuren 1 bis 4 schematisch dargestellt ist. Mit anderen Worten ist beim Ausführungsbeispiel der Figuren 1 bis 4 das Gehäuse 30 des Verbinders 28 separat von der ersten Komponente 12 ausgebildet. Der Verbinder 28 kann bei dieser Ausgestaltung in die Gehäuseaufnahme 60 eingesetzt und gegebenenfalls auch wieder aus dieser entnommen werden.

Die Gehäuseaufnahme 60 weist bei dem in den Figuren 1 bis 4 dargestellten Ausführungsbeispiel eine untere Gehäuseaufnahmewand 63 auf, welche parallel zur zweiten Komponente 14 verläuft, wenn diese mit der ersten Komponente 12 verbunden ist.

In den Figuren nicht dargestellt ist ein weiteres Ausführungsbeispiel, bei welchem das Gehäuse 30 direkt an der ersten Komponente 12 angeordnet oder ausgebildet ist, insbesondere einstückig. Beispielsweise kann das Gehäuse 30 monolithisch mit der ersten Komponente 12 ausgebildet sein. Alternativ kann das Gehäuse 30 auch mit der zweiten Komponente 14 lösbar verbindbar oder einstückig, insbesondere monolithisch, mit dieser ausgebildet sein.

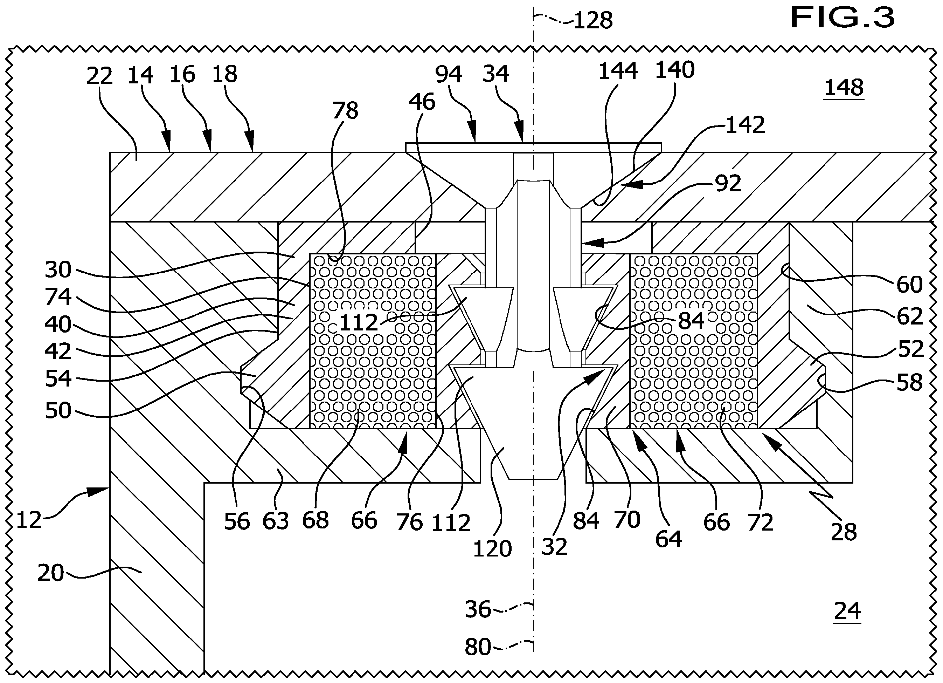

Das Verbindungssystem 10 umfasst ferner eine am Gehäuse 30 angeordnete beziehungsweise ausgebildete Sicherungseinrichtung 64. Diese ist angeordnet beziehungsweise ausgebildet zum Sichern des in die Kopplungsaufnahme 32 eingreifenden Verbindungselements 34 in einer Sicherungsstellung, wie sie schematisch in den Figuren 1 und 3 dargestellt ist und nachfolgend noch näher erläutert wird.

Die Sicherungseinrichtung 64 umfasst bei dem Ausführungsbeispiel des Verbinders 28 gemäß den Figuren 1 bis 8 mindestens ein erstes Sicherungselement 66, nämlich zwei Sicherungselemente 66, welche am Gehäuse 30 in einer Ebene quer, nämlich senkrecht, zur Kopplungslängsachse 36 bewegbar angeordnet oder ausgebildet sind.

Das erste Sicherungselement 66 umfasst ein vorspannendes Element 68 und einen an diesem gehaltenen ersten Sicherungsabschnitt 70.

In der Sicherungsstellung greift das erste Sicherungselement 66 mit dem ersten Sicherungsabschnitt 70 mindestens teilweise in die Kopplungsaufnahme 32 ein. Das vorspannende Element 68 ist mit dem ersten Sicherungsabschnitt 70 somit derart zusammenwirkend angeordnet oder ausgebildet, dass der erste Sicherungsabschnitt 70 entgegen der Wirkung des vorspannenden Elements 68 von der Sicherungsstellung in eine Freigabestellung bewegbar ist, in welcher das erste Sicherungselement 66 die Kopplungsaufnahme 32 zumindest so weit freigibt, dass das in die Kopplungsaufnahme 32 eingreifende Verbindungselement 34 parallel zur Kopplungslängsachse 36 bewegbar ist, insbesondere aus der Kopplungsaufnahme 32 durch die Einführöffnung 46 herausziehbar.

Das vorspannende Element 68 ist komprimierbar ausgebildet, und zwar derart, dass es durch Erhöhen eines isotropen Umgebungsdruck von einer unkomprimierten Ausgangsstellung in eine komprimierte Druckstellung bringbar ist. In der komprimierten Druckstellung ist ein vom vorspannenden Element 68 definiertes Hüllvolumen kleiner als in der Ausgangsstellung. Ferner nimmt das vorspannende Element 68 in der Freigabestellung die Druckstellung ein, ist also mithin zumindest teilweise komprimiert.

In den Figuren 2, 4 und 8 sind die beiden vorspannenden Elemente 68 des Verbinders 28 beispielhaft in der Druckstellung dargestellt. Die ersten Sicherungselemente 66 sind dabei von der Sicherungsstellung in die Freigabestellung, die die Figuren 2, 4 und 8 schematisch zeigen, bewegt.

Bei dem Ausführungsbeispiel der Figuren 1 bis 8 nehmen die vorspannenden Elemente 68 in der Sicherungsstellung die Ausgangsstellung ein.

Die vorspannenden Elemente 68 sind bei diesem Ausführungsbeispiel in Form eines komprimierbaren Schaumkörpers 72 ausgebildet, welcher isotrop komprimierbar ist. Der Schaumkörper ist quaderförmig ausgebildet und mit einer ersten Verbindungsfläche 74 mit dem Gehäuse 30, nämlich der Gehäusewand 40, kraft- und/oder form- und/oder stoffschlüssig verbunden.

Bei dem Ausführungsbeispiel der Figuren 1 bis 8 ist eine stoffschlüssige Verbindung durch Kleben oder Schweißen realisiert.

Das vorspannende Element 68 ist ausschließlich im Bereich der ersten Verbindungsfläche 74 mit dem Gehäuse 30, nämlich der Stirnwand 42, verbunden. Eine von der ersten Verbindungsfläche 74 in diametraler Richtung weg weisende Seitenfläche des Schaumkörpers 72 bildet eine zweite Verbindungsfläche 76, welche mit dem ersten Sicherungsabschnitt 70 kraft- und/oder form- und/oder stoffschlüssig verbunden ist.

In der beschriebenen Weise sind die ersten Sicherungselemente 66 in einer Sicherungselementaufnahme 78 des Gehäuses 30 bewegbar gehalten. Das vorspannende Element 68 stützt sich dabei einerseits am Gehäuse 30 und andererseits am ersten Sicherungsabschnitt 70 ab. Das erste Sicherungselement 66 ist in der beschriebenen Weise parallel zur Gehäuseoberseite 38 und somit quer, nämlich senkrecht, zur Kopplungslängsachse 36 bewegbar.

Beim Ausführungsbeispiel des Verbinders 28 gemäß der Figuren 1 bis 8 sind zwei die Kopplungsaufnahme 32 begrenzende und bezogen auf diese einander gegenüberliegende Sicherungselementaufnahmen 78 ausgebildet.

Der Verbinder 28 ist insgesamt spiegelsymmetrisch zu einer die Kopplungslängsachse 36 enthaltenden ersten Spiegelebene 80 ausgebildet, welche parallel zu den Stirnwänden 42 verläuft. Eine zweite Spiegelebene 82 des Verbinders 28 enthält ebenfalls die Kopplungslängsachse 36 und verläuft senkrecht zur ersten Spiegelebene 80.

Das vorspannende Element 68 in Form des Schaumkörpers 72 ist aus einem geschlossenzelligen oder zumindest teilweise geschlossenzelligem Schaumstoff ausgebildet. Der Schaumkörper 72 umfasst eine Vielzahl von geschlossenen gasdichten Hohlräumen, die mit einem komprimierbaren Fluid gefüllt sind. Das komprimierbare Fluid ist ein Gas. Es kann wahlweise ein Inertgas oder Luft sein.

Der Schaumkörper 72 ist aus einem geschäumten Kunststoff ausgebildet. Als mögliche Kunststoffe kommen hier insbesondere Polypropylen, Polyethylen oder Polysterol zum Einsatz.

Die beschriebene Ausgestaltung des vorspannenden Elements 68 ermöglicht dessen elastische Verformbarkeit, die später noch näher erläutert wird.

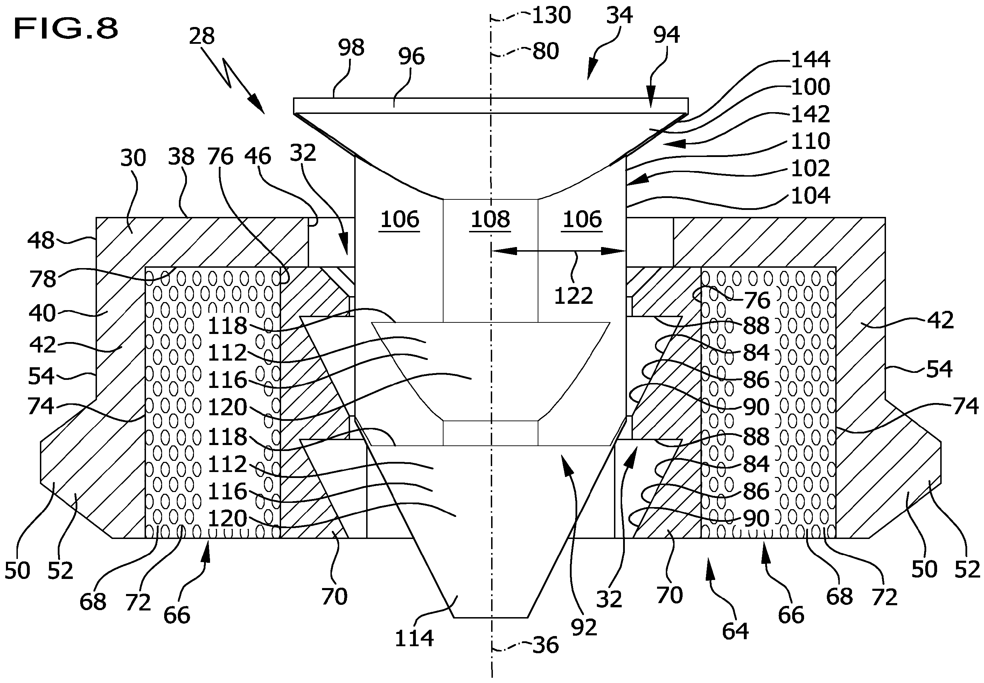

Wie insbesondere in Figur 8 gut zu erkennen, erstreckt sich das vorspannende Element 68 zwischen der Gehäusewand 40, nämlich einer Stirnwand 42, und dem ersten Sicherungsabschnitt 70.

Bei einem nicht dargestellten Ausführungsbeispiel umfasst das vorspannende Element 68 den ersten Sicherungsabschnitt 70. In diesem Fall ist das vorspannende Element 68 einstückig, insbesondere monolithisch, mit dem ersten Sicherungsabschnitt 70 ausgebildet.

Die erste Verbindungsfläche 74 und die zweite Verbindungsfläche 76 bilden jeweils einen Teil einer äußeren Oberfläche des vorspannenden Elements 68.

Am ersten Sicherungsabschnitt 70 sind ferner Rückhalteglieder 84 angeordnet. Diese sind beim Ausführungsbeispiel der Figuren 1 bis 8 in Form von Rückhalteausnehmungen 86 ausgebildet. Die Rückhalteglieder 84 weisen jeweils eine quer, nämlich senkrecht, zur Kopplungslängsachse 36 verlaufende Rückhaltefläche 88 auf. Die Rückhalteflächen 88 weisen bei dem in den Figuren 1 bis 8 dargestellten Ausführungsbeispiel in einer Richtung von der Einführöffnung 86 weg.

Die Rückhalteglieder 84 umfassen ferner eine geneigte, in Richtung auf die Kopplungslängsachse 36 und die Einführöffnung 46 weisende erste Aufgleitfläche 90. Die ersten Aufgleitflächen 90 sind im Wesentlichen hohlkegelig geformt und somit gekrümmt. Nehmen die vorspannenden Elemente 68 die unkomprimierte Ausgangsstellung ein, erstreckt sich die erste Aufgleitfläche 90 rotationssymmetrisch bezogen auf die Kopplungslängsachse 36.

Die beschriebene Ausgestaltung der Rückhalteglieder 84 bildet eine Verzahnung, die mit dem separat vom Gehäuse 30 ausgebildeten Verbindungselement 34 zusammenwirkt, wie nachfolgend noch näher erläutert wird.

Das Verbindungselement 34 umfasst einen Kopplungsabschnitt 92 sowie einen Rückhalteabschnitt 94. Der Rückhalteabschnitt 94 ist an einem Ende des Kopplungsabschnitts 92 angeordnet beziehungsweise ausgebildet und erstreckt sich im Wesentlichen quer zur Kopplungslängsachse 36. Bei dem Ausführungsbeispiel der Figuren 1 bis 8 ist der Kopplungsabschnitt 94 in Form eines Kopfs 96 ausgebildet. Der Kopf 96 weist eine ebene Endfläche 98 und eine in entgegengesetzter Richtung auf das andere Ende des Kopplungsabschnitts 92 hin weisende konvex gewölbte Kopfunterseite 100 auf.

Der Kopplungsabschnitt 92 ist derart bemessen, dass er durch die Einführöffnung 46 in die Kopplungsaufnahme 32 parallel zur Kopplungslängsachse 36 eingeführt und mit dem ersten Sicherungsabschnitt 70 kraft- und/oder formschlüssig in Eingriff gebracht werden kann. Stehen die ersten Sicherungsabschnitte 70 des Verbinders 28 mit dem Kopplungsabschnitt 92 in Eingriff, ist das Verbindungselement 34 gesichert und nimmt die Sicherungsstellung ein.

Der Kopplungsabschnitt 92 weist einen flachen quaderförmigen Abschnitt 102 auf, welcher zwei schmale, voneinander weg weisende Seitenkanten 104 und zwei breite, die schmalen Seitenkanten 104 miteinander verbindende Seitenflächen 106 aufweist. Von den Seitenflächen 106 steht jeweils eine parallel zur Kopplungslängsachse 36 und bezogen auf diese konvex gekrümmte Rippe 108 ab. Auf diese Weise ergibt sich ein Querschnitt des Kopplungsabschnitts 92 derart, dass er sich längs seiner Erstreckung quer zur Kopplungslängsachse 36 unrund ist.

Der Kopplungsabschnitt 92 umfasst bei dem Ausführungsbeispiel der Figuren 1 bis 8 zwei einander diametral gegenüberliegende Gleitflächenabschnitte 110. Sie werden durch die Seitenkanten 104 gebildet. Die Gleitflächenabschnitte 110 verlaufen parallel zur Kopplungslängsachse 36.

Am Kopplungsabschnitt 92 sind ferner mehrere Rastglieder 112 angeordnet beziehungsweise ausgebildet, die mit den Rückhaltegliedern 84 in der Sicherungsstellung in Eingriff stehen. Ein Rastglied 112 wird gebildet durch einen kegelstumpfförmigen Endabschnitt 114, welcher einen Rastvorsprung 116 definiert. Der Endabschnitt 114 verjüngt sich in einer Richtung vom Rückhalteabschnitt 94 weg. Der Endabschnitt 114 steht seitlich über die Seitenflächen 106 vor, sodass zwei nahezu halbkreisförmige Rastflächen 118 ausgebildet werden, die parallel zur Endfläche 98 verlaufen und in Richtung auf den Rückhalteabschnitt 94 hin weisen.

Zwischen dem Rückhalteabschnitt 94 und dem Endabschnitt 114 ist an jeder Seitenfläche 106 ein weiterer Rastvorsprung 116 ausgebildet. Diese weiteren Rastvorsprünge 116 sind konzentrisch zur Kopplungslängsachse 36 angeordnet und weisen eine in Richtung auf den Rückhalteabschnitt 94 weisende Rastfläche 118 auf.

Sowohl die Rastvorsprünge 116 als auch der Endabschnitt 114 umfassen jeweils eine zweite Aufgleitfläche 120. Diese ist von der Kopplungslängsachse 36 und der Einführöffnung 46 weg weisend geneigt.

Ferner ist ein erster Abstand 122 des Gleitflächenabschnitts 110 von der Kopplungslängsachse 36 in radialer Richtung größer als ein zweiter Abstand 124 eines freien, von der Kopplungslängsachse 36 in radialer Richtung weg weisenden Endes 126 der Rastglieder 112 von der Kopplungslängsachse 36.

Das Verbindungselement 34 ist spiegelsymmetrisch bezüglich einer ersten Symmetrieebene 128 und einer senkrecht zu dieser verlaufenden zweiten Symmetrieebene 130 ausgebildet. Beide Symmetrieebenen 128, 130 enthalten die Kopplungslängsachse. Jeder Gleitflächenabschnitt 110 ist bezogen zur ersten Symmetrieebene 128 spiegelsymmetrisch zu sich selbst ausgebildet. Die zweite Symmetrieebene 130 ist eine Spiegelebene, die die Rastglieder 110 in sich selbst überführt.

Wie bereits erwähnt verlaufen die Symmetrieebenen 128 und 130 senkrecht zueinander. Sie schließen somit einen Lösewinkel 132 zwischen sich ein, welcher in einem Bereich von 80° bis 220°, also in einem Bereich von 80° bis 110° liegt und konkret 90° beträgt.

Die Rastglieder 112 erstrecken sich in Umfangsrichtung bezogen auf die Kopplungslängsachse 36 über einen Umfangswinkel in einem Bereich von etwa 100° bis etwa 175°.

Am Verbindungselement 34 ist ferner ein von diesem und in Richtung der Kopplungslängsachse 36 weg weisendes Werkzeugkupplungsglied 134 angeordnet beziehungsweise ausgebildet zum formschlüssigen in Eingriff Bringen mit einem in den Figuren nicht dargestellten Eindrehwerkzeug.

Bei dem Ausführungsbeispiel der Figuren 1 bis 8 ist das Werkzeugkupplungsglied 134 am Rückhalteabschnitt 94 ausgebildet, und zwar in Form einer Werkzeugaufnahme 136, welche sich ausgehend von der Endfläche 98 in den Rückhalteabschnitt 94 hinein erstreckt. Die Werkzeugaufnahme 136 ist bei dem in den Figuren dargestellten Ausführungsbeispiel in Form eines Schlitzes 138 ausgebildet. Der Schlitz 138 erstreckt sich senkrecht zur zweiten Symmetrieebene 130 und somit in einer Richtung parallel zur ersten Symmetrieebene 128. Mithin zeigt also der Schlitz 138 an, in welcher Richtung sich der quaderförmige Abschnitt 102 erstreckt. Die Seitenflächen 106 verlaufen parallel zur ersten Symmetrieebene 128.

Die Funktionsweise des Verbindungssystems wird nachfolgend erläutert.

Um die beiden Komponenten 12 und 14 miteinander zu verbinden, wird an der ersten Komponente 12 in die Gehäuseaufnahmen 60 jeweils ein Verbinder 28 in der oben beschriebenen Weise eingesetzt. Nun kann die zweite Komponente 14 auf die erste Komponente 12 aufgelegt werden. An der zweiten Komponente 14 sind Durchbrechungen 140 ausgebildet, die jeweils mit einer Kopplungsaufnahme 32 fluchtend ausgerichtet sind.

Das Verbindungselement 34 kann nun mit dem Endabschnitt 114 voraus zunächst durch die Durchbrechung 140 und dann durch die sich direkt an diese anschließende Einführöffnung 146 in die Kopplungsaufnahme 32 eingeschoben werden. Die Gehäuseaufnahmewand 63 der Gehäuseaufnahme 60 bildet jeweils einen Anschlag beziehungsweise eine Begrenzung für die ersten Sicherungselemente 66, so dass diese nicht in einer Richtung von der zweiten Komponente 14 weg durch das eingeschobene Verbindungselement 34 ausgelenkt werden können. Zudem dienen die Gehäuseaufnahmewände 63 auch einer Führung der ersten Sicherungselemente 34 beim Auslenken von der Kopplungslängsachse 36 weg und bei einer Bewegung auf die Kopplungslängsachse 36 hin.

Herrscht in einer Umgebung der beschriebenen Anordnung normaler Atmosphärendruck, nimmt das vorspannende Element 68 eine unkomprimierte Ausgangsstellung ein. Die ersten Sicherungsabschnitte 70 ragen dann teilweise in die Kopplungsaufnahme 32 hinein.

Beim Vorschieben des Verbindungselements 34 in die Kopplungsaufnahme 32 hinein gleiten die zweiten Aufgleitflächen 120 am ersten Sicherungsabschnitt 70 auf und bewegen diesen entgegen der Wirkung des vorspannenden Elements 68 von der Kopplungslängsachse 36 weg. Hintergreift die Rastfläche 118 die Rückhaltefläche 88, entspannt sich das vorspannende Element 68 und bewegt den ersten Sicherungsabschnitt 70 wieder in Richtung auf die Kopplungslängsachse 36 hin. Wird das Verbindungselement 34 weiter in die Kopplungsaufnahme 32 hineingeschoben, erfolgt ein zweiter Aufgleitvorgang, sodass dann wiederum das vorspannende Element 68 komprimiert wird, und zwar bis der Endabschnitt 114 als vorderes Rastglied 112 und die beiden anderen Rastglieder 112 jeweils in eine Rückhalteausnehmung 86 eingreifen. Das vorspannende Element 68 hält dabei die ersten Sicherungsabschnitte 70 mit dem Kopplungsabschnitt 92 in der beschriebenen Weise in Eingriff, wie dies beispielhaft in den Figuren 1 und 3 dargestellt ist.

Die zweite Komponente 14 ist nun zwischen dem Rückhalteabschnitt 94 und dem Gehäuse 30 in der Sicherungsstellung gehalten und greift in eine zwischen dem Rückhalteabschnitt 94 und dem Gehäuse 30 definierte Hinterschneidung 142 ein. Die Hinterschneidung 142 ist somit von der Gehäuseoberseite 38 einerseits und von einer Rückhalteabschnittsfläche 144, welche durch die Kopfunterseite 100 definiert ist, begrenzt. Die Rückhalteabschnittsfläche 144 weist in Richtung auf die Gehäuseoberseite 138 hin.

Zum Trennen der beiden Komponenten 12 und 14 gibt es insbesondere zwei Möglichkeiten.

Gemäß einer ersten Möglichkeit lässt sich die Verbindung automatisch lösen, und zwar durch Erhöhen eines Umgebungsdrucks der mechanischen Vorrichtung 16. In den Figuren 1 und 2 ist schematisch eine Druckkammer 146 dargestellt, welche einen Druckkammerraum 148 zum Aufnehmen der mit dem Verbindungssystem verbundenen Komponenten 12 und 14 ausgebildet ist.

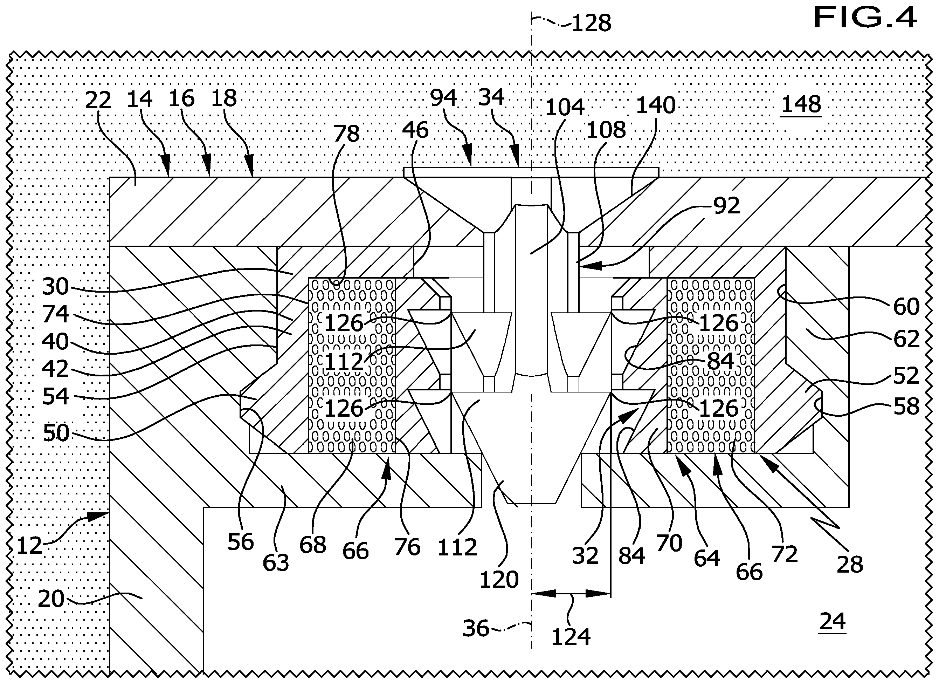

Mit einer Druckerzeugungseinrichtung 150, die in den Figuren 1 und 2 schematisch dargestellt und beispielweise in Form einer Pumpe 152 ausgebildet ist, kann ein Fluiddruck im Druckkammerraum 148 gegenüber einem in einer Umgebung 154 der Druckkammer 146 herrschenden Umgebungsdruck erhöht werden. Die Druckerhöhung in der Druckkammer 146 führt, wie schematisch in den Figuren 2 und 4 dargestellt, zu einer Kompression des vorspannenden Elements 68, da das in dessen Hohlräumen enthaltende komprimierbare Fluid nicht entweichen kann. Die einseitige Befestigung des vorspannenden Elements 68 am Gehäuse 30 führt bei Komprimierung des vorspannenden Elements 68 zu einer Bewegung des ersten Sicherungsabschnitts 70 von der Kopplungslängsachse 36 weg, sodass also das vorspannende Element 68 den ersten Sicherungsabschnitt 70 entgegen der Wirkung des vorspannenden Elements 68 von der Sicherungsstellung in eine Freigabestellung bewegt. Das vorspannende Element 68 nimmt dabei eine komprimierte Druckstellung ein, in welcher das vom vorspannenden Element 68 definierte Hüllvolumen kleiner ist als in der Ausgangsstellung. In der Freigabestellung nimmt das vorspannende Element 68 also die Druckstellung ein. Die Figuren 2 und 4 zeigen schematisch sowohl die Freigabestellung als auch die Druckstellung.

In der beschriebenen Weise lässt sich also das Verbindungselement 34 vom Verbinder 28 lösen. Es wurde also ein Verfahren zum automatischen Lösen der Komponenten 12 und 14 voneinander beschrieben, die zunächst miteinander verbunden sind, und zwar mit dem Verbindungssystem 10. Werden die beiden Komponenten 12 und 14 bei Atmosphärendruck in den Druckkammerraum 148 der Druckkammer 146 eingebracht, die Druckkammer 146 geschlossen und der Druck in der Druckkammer 146 erhöht, so wird das vorspannende Element 68 von der Ausgangsstellung in die Druckstellung überführt.

Um alle Verbindungselemente 34 einfach und sicher von den Verbindern 28 zu lösen, ist es vorteilhaft, wenn die Druckkammer 146 bewegt wird, insbesondere geschüttelt, wenn in ihr ein gegenüber dem Atmosphärendruck erhöhter Druck herrscht.

Abschließend können der Druck in der Druckkammer 146 wieder auf den Wert des in der Umgebung 154 herrschenden Drucks abgesenkt und die Druckkammer 146 geöffnet werden. Die mit dem Verbindungssystem 10 ursprünglich verbundenen Komponenten 12 und 14 sind nun voneinander getrennt und können einzeln entnommen werden.

Gemäß einer zweiten Möglichkeit kann die Verbindung des Verbindungselements 34 vom Verbinder 28 aber auch ohne Druckkammer 146 gelöst werden, wenn eine solche beispielsweise nicht zur Verfügung steht.

In der Sicherungsstellung ist das Verbindungselement 34 derart ausgerichtet, dass die Seitenflächen 106 parallel zu den Stirnwänden 42 ausgerichtet sind. Wird nun das Verbindungselement 34 beispielsweise durch in Eingriff Bringen mit einem nicht dargestellten Eindrehwerkzeug mit dem Werkzeugkupplungsglied 134 um den Lösewinkel 132 verdreht, bewegen sich die Gleitflächenabschnitte 110 in Richtung auf die ersten Sicherungsabschnitte 70 hin und führen zu einer Komprimierung des vorspannenden Elements 68. Die Gleitflächenabschnitte 110 können aufgrund ihrer Form keine formschlüssige Verbindung mit dem jeweiligen ersten Sicherungsabschnitt 70 eingehen, sodass sich das Verbindungselement 34 aus der Kopplungsaufnahme 32 herausziehen lässt.

Wie beschrieben ist also das Verbindungselement 34 relativ zum Gehäuse 30 ausgehend von der Sicherungsstellung in eine Lösestellung verdrehbar, in welcher die Gleitflächenabschnitte 110 jeweils an einem ersten Sicherungsabschnitt 70 anliegen. Die Verdrehung erfolgt wie beschrieben um den Lösewinkel 132. Beim Lösen des Verbindungselements 34 wie beschrieben durch Verdrehen desselben relativ zum Verbinder 28 übt das vorspannende Element 68 eine vorspannende Kraft aus und drückt den ersten Sicherungsabschnitt 70 gegen die Gleitflächenabschnitte 110. So ergibt sich zwar noch eine Klemmwirkung des Verbinders 28 relativ zum Verbindungselement 34, jedoch ist keine formschlüssige Verbindung mehr realisiert, die das Herausziehen des Verbindungselements 34 aus der Kopplungsaufnahme 32 verhindern würde.

Bei einem alternativen Ausführungsbeispiel ist das Gehäuse 30 der Gehäuseoberseite gegenüberliegend durch eine Gehäuseunterseitenwand verschlossen, die dann die Funktion der Gehäuseaufnahmewand 63 übernimmt.

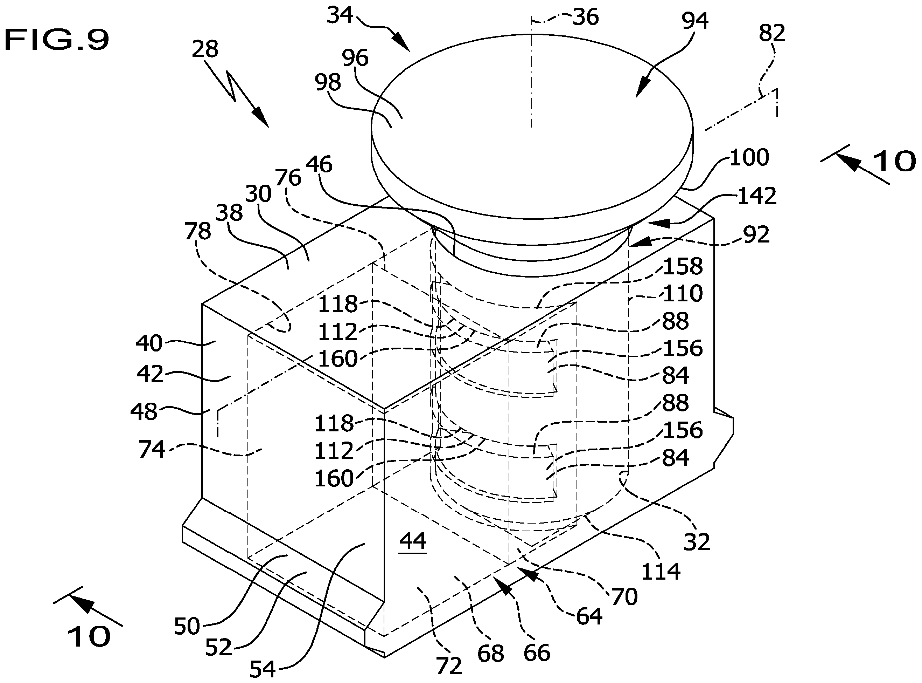

In den Figuren 9 bis 12 ist ein weiteres Ausführungsbeispiel eines Verbinders 28 eines Verbindungssystem 10 schematisch dargestellt. Für identische beziehungsweise in ihrer Funktion vergleichbare Teile und Komponenten sind bei dem Ausführungsbeispiel der Figuren 9 bis 12 dieselben Bezugszeichen verwendet wie beim Ausführungsbeispiel der Figuren 1 bis 8.

Der wesentliche Unterschied zwischen dem Ausführungsbeispiel der Figuren 9 bis 12 und dem Ausführungsbeispiel der Figuren 1 bis 8 besteht darin, dass nur ein einziges erstes Sicherungselement 66 vorgesehen ist. Es umfasst ein quaderförmiges vorspannendes Element 68 mit den bereits im ersten Ausführungsbeispiel des Verbinders 28 beschriebenen Eigenschaften.

Insgesamt ist der Verbinder 28 spiegelsymmetrisch zur Spiegelebene 82 ausgebildet. Er weist nur diese eine Spiegelebene 82 auf. Die Kopplungsaufnahme 32 ist in Richtung auf eine der beiden Stirnwände 42 hin versetzt und weist die Form eines hohlen Kreiszylinders auf. Der erste Sicherungsabschnitt 70 ist an der zweiten Verbindungsfläche 76 stoffschlüssig gehalten. Die erste Verbindungsfläche 74 des vorspannenden Elements 68 ist mit der zweiten Stirnwand 42 stoffschlüssig verbunden. In den Figuren 9 bis 11 ist schematisch die Sicherungsstellung dargestellt. Das vorspannende Element 68 ist dabei unkomprimiert und nimmt die Ausgangsstellung ein.

Am ersten Sicherungsabschnitt 70 sind zwei Rückhalteglieder 84 in Form von Rückhaltevorsprüngen 156 ausgebildet, welche im Querschnitt eine viereckige Kontur aufweisen und jeweils zwei parallel zueinander und parallel zur Gehäuseoberseite 38 verlaufende Rückhalteflächen 68 definieren. In der Sicherungsstellung wird die Kopplungsaufnahme 32 von einer hohlzylindrischen Wandfläche 158 des ersten Sicherungsabschnitts 70 begrenzt. Die Rückhaltevorsprünge 156 stehen von dieser Wandfläche 158 ab und ragen in die einen kreisförmigen Querschnitt definierende Kopplungsaufnahme 32 hinein.

Die Einführöffnung 46 an der Gehäuseoberseite 38 weist ebenfalls einen kreisförmigen Querschnitt auf.

Das Verbindungselement 34 umfasst einen Rückhalteabschnitt 94, welcher an einem Ende eines eine zylindrische Grundform aufweisenden Kopplungsabschnitts 92 ausgebildet ist. Ein dem Rückhalteabschnitt 94 gegenüberliegender Endabschnitt 114 des Verbindungselements 34 ist kegelförmig zulaufend ausgebildet. Die Kopfunterseite 100 des durch den Rückhalteabschnitts 94 ausgebildeten Kopfs 96 ist ringförmig in sich geschlossen und definiert einen Ausschnitt eines Kreiskegels.

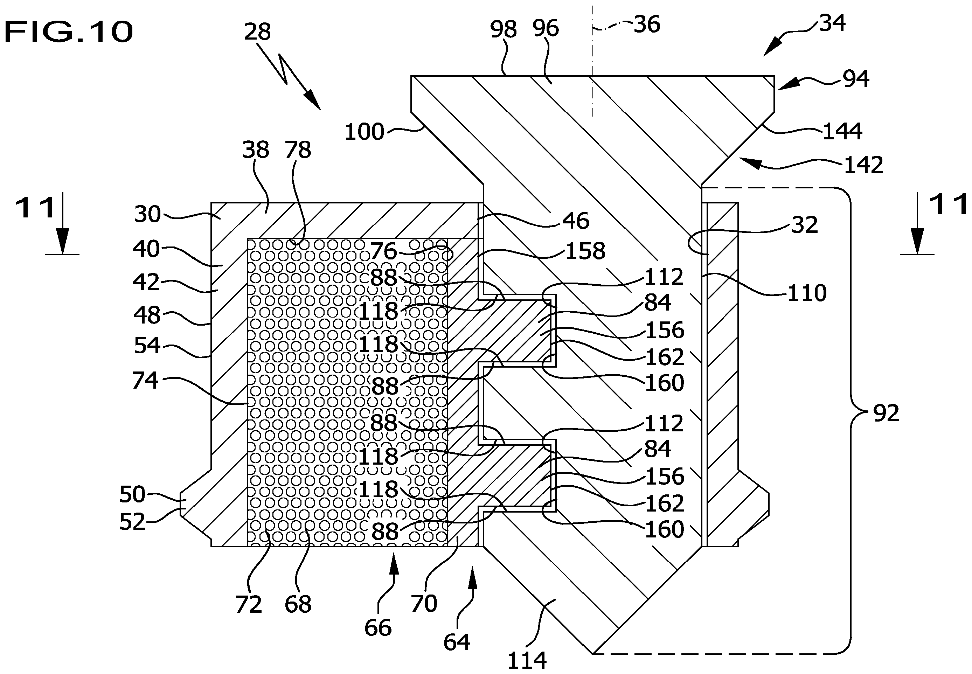

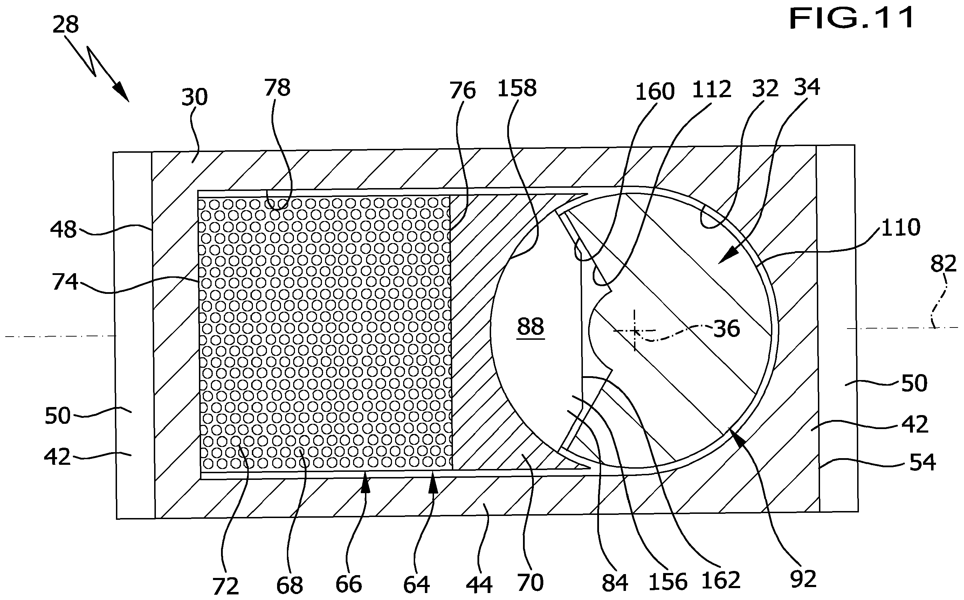

Am Kopplungsabschnitt 92 sind zwei Rastglieder 112 in Form von Rastausnehmungen 160 ausgebildet. Sie sind an die Kontur der Rückhaltevorsprünge 156 angepasst und können diese in der Sicherungsstellung aufnehmen, wie dies schematisch in den Figuren 10 und 11 dargestellt ist.

In analoger Weise wie beim Ausführungsbeispiel der Figuren 1 bis 8 sind am Gehäuse 30 zwei erste Kupplungsglieder 50 angeordnet beziehungsweise ausgebildet, sodass auch dieser Verbinder 28 in eine entsprechende Gehäuseaufnahme 60 an einer ersten Komponente 12 oder an einer zweiten Komponente 14 eingesetzt werden kann.

Zum Verbinden zweier Komponenten 12 und 14 wird analog wie oben beschrieben vorgegangen. Die Komponenten 12 und 14 werden miteinander in Einlage gebracht und das Verbindungselement 34 wird durch die Durchbrechung 140 an der zweiten Komponente 14 mit dem Endabschnitt 114 voran durch die Einführöffnung 46 in die Kopplungsaufnahme 32 eingeführt. Die Rückhaltevorsprünge 156 gleiten dabei an der eine zweite Aufgleitfläche 120 definierenden Außenseite des Endabschnitts 114 auf, sodass das vorspannende Element 68 komprimiert wird. Sobald die beiden Rückhaltevorsprünge 156 in die korrespondierenden Rastausnehmungen 160 eintauchen können, bewegt das vorspannende Element 68 den ersten Sicherungsabschnitt 70 in Richtung auf die Kopplungslängsachse 36 hin, sodass die Sicherungsstellung eingenommen wird.

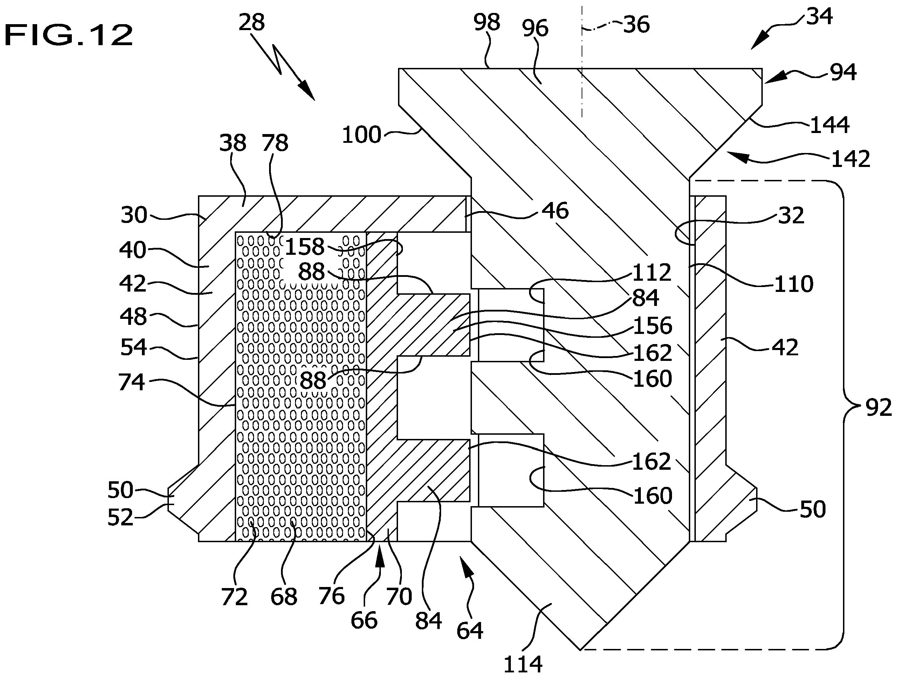

Zum Lösen des Verbindungselements 34 vom Verbinder 28 können wie oben beschrieben die Anordnung in den Druckkammeraum 148 der Druckkammer 146 eingesetzt und der Druck in der Druckkammer 146 erhöht werden, wodurch das vorspannende Element 68 komprimiert wird. Dabei zieht es den ersten Sicherungsabschnitt 70 aus der Kopplungsaufnahme heraus, sodass die in Figur 12 dargestellte Freigabestellung eingenommen wird. Das Verbindungselement 34 kann nun herausgezogen oder herausgeschüttelt werden.

Alternativ, also ohne eine verfügbare Druckkammer 146, kann das Verbindungselement 34 ausgehend von der in den Figuren 10 und 11 dargestellten Sicherungsstellung um einen Lösewinkel 132 verdreht werden, der so groß ist, dass die Rückhaltevorsprünge 156 auf einer Außenseite des Kopplungsabschnitts 92, welche ausnehmungsfrei ausgebildet ist und somit einen Gleitflächenabschnitt 110 bildet, aufgleiten, wodurch der erste Sicherungsabschnitt 70 von der Kopplungslängsachse 36 in Richtung auf das vorspannende Element 68 gedrückt wird. Das vorspannende Element 68 wird dabei komprimiert und übt eine vorspannende Kraft auf den ersten Sicherungsabschnitt 70 aus, welcher dann mit Stirnseiten 162 der Rückhaltevorsprünge 156 gegen den Gleitflächenabschnitt 110 gedrückt wird. Das Verbindungselement 34 wird dann nur noch kraftschlüssig in der Kopplungsaufnahme 32 gehalten, jedoch nicht mehr durch einen Formschluss zwischen den Rückhaltegliedern 84 und den Rastgliedern 112.

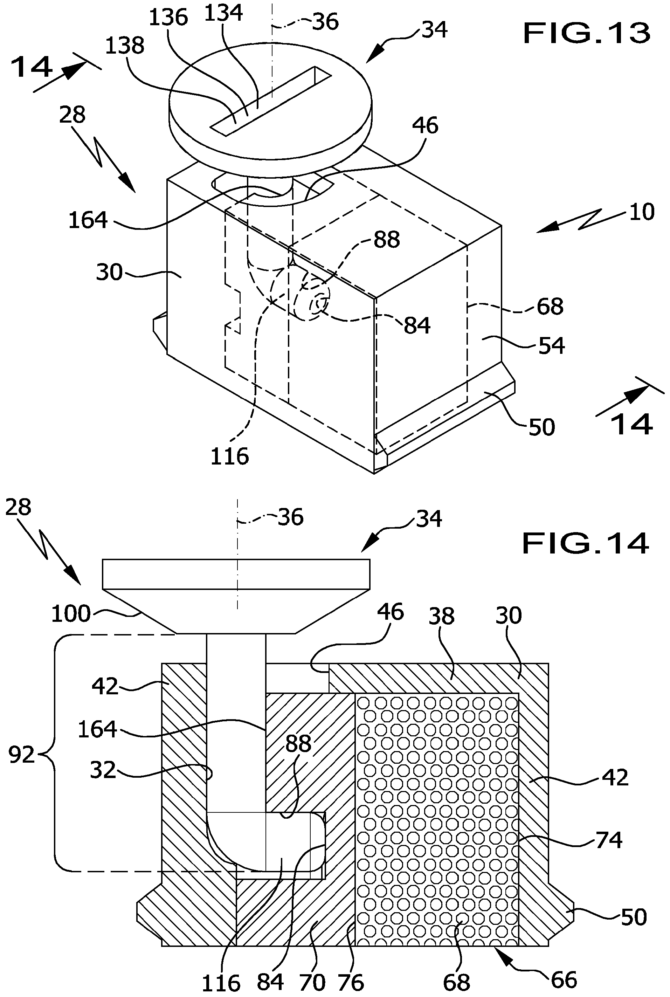

In den Figuren 13 bis 17 ist ein weiteres Ausführungsbeispiel eines Verbinders 28 eines Verbindungssystems 10 schematisch dargestellt. Auch hier sind für identische oder funktional vergleichbare Komponenten dieselben Bezugszeichen verwendet wie bei den oben beschriebenen Ausführungsbeispielen.

Das Gehäuse 30 des Verbinders 28 gemäß dem Ausführungsbeispiel der Figuren 13 bis 17 stimmt nahezu identisch mit dem Gehäuse 30 des Ausführungsbeispiels der Figuren 9 bis 12 überein. Einzig die Einführöffnung 46 hat hier eine Querschnittsform, die die Form eines Viertelkreises aufweist, wobei die Spitze zum Mittelpunkt des Viertelkreises abgerundet ist, und zwar mit einem Radius, welcher durch den Kopplungsabschnitt 92 des Verbindungselements 34 vorgegeben ist.

Auch bei diesem Ausführungsbeispiel ist lediglich ein erstes Sicherungselement 66 vorgesehen, welches ein quaderförmiges vorspannendes Element 68 umfasst, welches mit seiner ersten Verbindungsfläche 74 stoffschlüssig mit der Stirnwand 42 des Gehäuses 30 verbunden ist. Die zweite Verbindungsfläche 76 ist mit dem ersten Sicherungsabschnitt 70 stoffschlüssig verbunden.

Eine Grundform des ersten Sicherungsabschnitts 70 ist quaderförmig. Ausgehend von der Einführöffnung 46 ist am ersten Sicherungsabschnitt 70 eine im Querschnitt halbkreisförmige Nut 164 ausgebildet. Ein Radius der Nut 164 entspricht dem Radius des Kopplungsabschnitts 92. Die Nut 164 erstreckt sich nicht über die ganze Länge des ersten Sicherungsabschnitts 70 parallel zur Kopplungslängsachse 36, sondern endet etwas beabstandet von einem von der Einführöffnung 46 weg weisenden Ende des ersten Sicherungsabschnitts 70. Ausgehend von diesem Ende ist am ersten Sicherungsabschnitt ein Rückhalteglied 84 in Form einer Rückhalteausnehmung 86 ausgebildet. Diese weist einen kreisförmigen Querschnitt auf. Eine Längsachse der Rückhalteausnehmung 86 verläuft sowohl senkrecht zu den Stirnwänden 42 als auch senkrecht zur Kopplungslängsachse 36. Die beschriebene Rückhalteausnehmung 86 erweitert sich in einer Ebene senkrecht zur Kopplungslängsachse 36 zur Kopplungsaufnahme 32 hin.

Der Kopplungsabschnitt 92 ist langgestreckt zylindrisch ausgebildet und verläuft parallel zur Kopplungslängsachse 36. An einem vom Rückhalteabschnitt 96 weg weisenden Ende ist ein Rastvorsprung 116 senkrecht zur Kopplungslängsachse 36 abstehend ausgebildet. Dieser weist einen kreisförmigen Querschnitt auf, sodass er in der Rückhalteausnehmung 86 im Wesentlichen formschlüssig aufgenommen werden kann.

Am Rückhalteabschnitt 94 ist ein Werkzeugkupplungsglied 134 in Form eines Schlitzes 138 ausgebildet. Eine vom Schlitz 138 definierte Längsrichtung erstreckt sich senkrecht zur Längsachse des Rastvorsprungs 116.

Zum Verbinden zweier Komponenten 12 und 14 kann wie bei den bereits oben beschriebenen Ausführungsbeispielen vorgegangen werden. Beim Ausführungsbeispiel der Figuren 13 bis 17 wird der Kopplungsabschnitt 92 wiederum durch die Durchbrechung 140 an der zweiten Komponente 14 hindurch und dann durch die Einführöffnung 46 des Gehäuses 30 in die Kopplungsaufnahme 32 eingeführt. Um dies zu ermöglichen, wird die Längsachse des Rastvorsprungs 116 parallel zu den Stirnwänden 42 ausgerichtet.

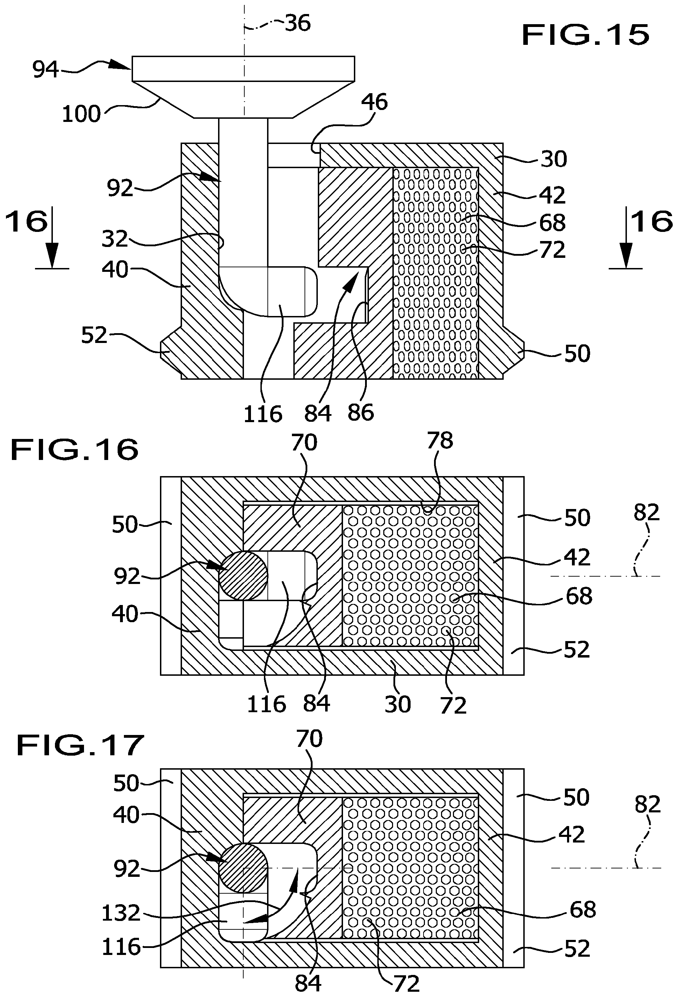

Die Stirnwand 42, an welcher die Kopplungsaufnahme 32 angrenzend ausgebildet ist, erstreckt sich nicht über die gesamte Länge des Gehäuses 30 parallel zur Kopplungslängsachse 36, sondern endet etwas oberhalb der ersten Kupplungsglieder 50. Ist der Kopplungsabschnitt 92 maximal weit in die Kopplungsaufnahme 32 eingeführt, wird zum Sichern des Verbindungselements 34 am Verbinder 28 das Verbindungselement 34 um den Lösewinkel 132 um die Kopplungslängsachse 36 verschwenkt. Figur 17 zeigt schematisch die Stellung des Verbindungselements nach dem Einführen in die Kopplungsaufnahme 32, Figur 16 nach dem Verschwenken in die Rückhalteausnehmung 86 hinein. Figur 14 zeigt, ebenso wie Figur 13, schematisch die Stellung des Verbindungselements entsprechend Figur 16.

Zum Lösen der Verbindung zwischen dem Verbindungselement 34 und dem Verbinder 28, mithin also zum Überführen des Verbindungselements 34 von der Sicherungsstellung in eine Freigabestellung, kann wie bereits oben beschrieben ein Umgebungsdruck, insbesondere in einer Druckkammer 146, erhöht werden, sodass das vorspannende Element 68 wie schematisch in Figur 15 dargestellt komprimiert wird mit der Folge, dass der erste Sicherungsabschnitt 70 so weit zurückgezogen wird, dass das Verbindungselement 34 auch in der um 90° verschwenkten Stellung, wie in den Figuren 13 bis 16 dargestellt, aus der Kopplungsaufnahme 32 herausbewegt werden kann.

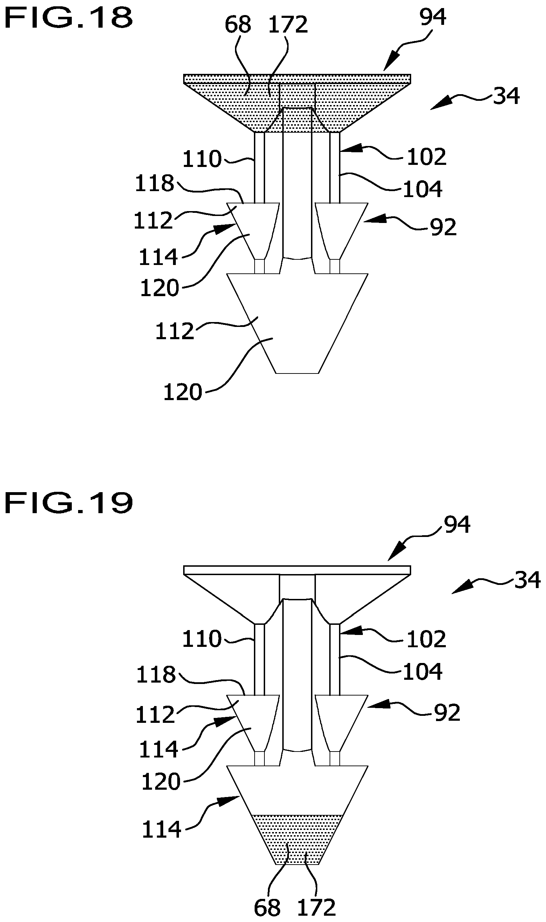

In Figur 18 ist ein weiteres Ausführungsbeispiel eines Verbindungselements 34 schematisch dargestellt. Es stimmt in seinem Aufbau mit dem Verbindungselement gemäß dem Ausführungsbeispiel der Figuren 1 bis 8 identisch überein.

Es unterscheidet sich jedoch von diesem durch die Ausgestaltung des Rückhalteabschnitts 94. Dieser ist im Ausführungsbeispiel der Figur 18 in Form eines Spannglieds 172 ausgebildet. Das Spannglied 172 ist bei dem dargestellten Ausführungsbeispiel durch einen elastischen Gummi ausgebildet und kann so eine Position des Rückhalteabschnitts 94 in der Durchbrechung 140 zusätzlich klemmend sichern.

Die beschriebene Ausgestaltung ermöglicht es insbesondere, den Rückhalteabschnitt 94 in der Durchbrechung 140 der zweiten Komponente 14 klemmend zu halten.

Das in Figur 19 schematisch dargestellte Ausführungsbeispiel eines Verbindungselements 34 stimmt im Aufbau mit dem Ausführungsbeispiel der Figuren 1 bis 8 überein. Allerdings ist hier eine vordere Hälfte des Endabschnitts 114 in Form eines Spannglieds 172 ausgebildet. Auch bei diesem Ausführungsbeispiel ist es durch einen elastischen Gummi ausgebildet. Diese Ausgestaltung ermöglicht es insbesondere, das Verbindungselement 34 entgegen der Wirkung des Spannglieds 172, welches sich beispielsweise an einer Gehäuseunterseite 166 des Gehäuses 30 oder an einer der zwei miteinander zu verbindenden Komponenten 12 oder 14 der mechanischen Vorrichtung abstützt, in der Sicherungsstellung mit den Rastflächen 118 gegen die Rückhalteflächen zu drücken, um den Verbinder 28 in der Sicherungsstellung zusätzlich zu sichern.

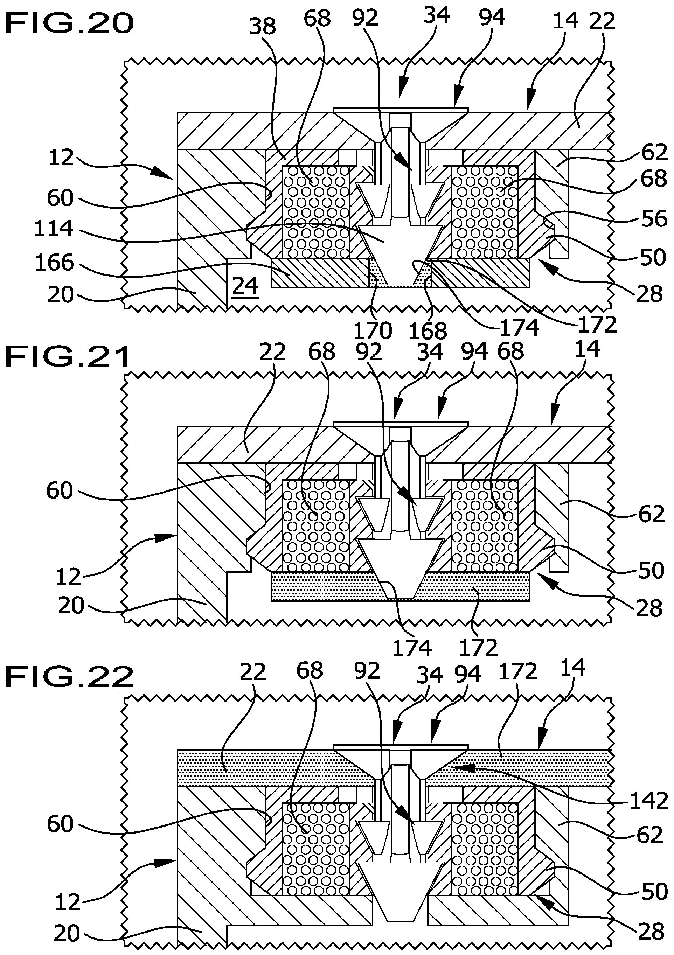

Figur 20 zeigt schematisch eine ähnliche Ansicht wie Figur 3. Bei dem in Figur 20 dargestellten Ausführungsbeispiel ist der Verbinder 28 zusätzlich mit einer wandförmigen Gehäuseunterseite 166 ausgestattet, welche eine zentrale Durchbrechung 168 aufweist. Die Gehäuseunterseite 166 liegt der Gehäuseoberseite 38 gegenüber. Die Durchbrechung 168 bildet eine Gehäuseunterseitenöffnung 170. In diese ist ein Spannglied 172 eingesetzt, welches einen Anschlag für den Endabschnitt 114 bildet und diesen vorgespannt in Richtung auf die Gehäuseoberseite 38 hin hält. So wird das Verbindungselement 34 in der Sicherungsstellung zusätzlich gesichert, indem die Rastglieder 112 gegen die Rückhalteglieder 84 vorgespannt gehalten werden.

Das Spannglied 172 ist aus einem elastischen Kunststoff oder aus Gummi ausgebildet derart, dass es infolge einer Auslenkung aus einer Grundstellung, in welcher es mit dem Verbindungselement 34 außer Eingriff steht, auf das Verbindungselement 34 eine Rückstellkraft in Richtung auf die Gehäuseoberseite 38 hin ausübt.

Wie sich aus Figur 20 unmittelbar ergibt, kann ein freies Ende des Endabschnitts 114, welcher in eine Ausnehmung 174 des Spannglieds 172 eingreift, durch das Spannglied 172 axial, also parallel zur Kopplungslängsachse 36, in einer definierten Stellung gehalten werden, nämlich insbesondere derart, dass die Rastglieder 112 gegen die Rückhalteglieder 84 gedrückt werden.

Das in Figur 21 schematisch dargestellte Ausführungsbeispiel unterscheidet sich von der Anordnung aus Figur 20 insbesondere dadurch, dass die gesamte wandförmige Gehäuseunterseite 166 durch das Spannglied 172 gebildet ist. Eine Funktionsweise des in Figur 21 schematisch dargestellten Verbinders 28 entspricht dann der Funktionsweise des Verbinders 28 gemäß dem Ausführungsbeispiel der Figur 20.

Eine weitere Variante eines Verbindungssystems 10 ist beispielhaft in Figur 22 schematisch dargestellt. Der Unterschied zur Anordnung gemäß Figur 3 besteht insbesondere darin, dass die zweite Komponente 14 aus einem elastischen Kunststoff oder aus Gummi ausgebildet ist und ein Spannglied 172 bildet. Es übt aufgrund seiner Anordnung zwischen dem Rückhalteabschnitt 94 des Verbindungselements 34 und der Gehäuseoberseite 38 infolge einer Kompression eine Druckkraft aus und hält den Rückhalteabschnitt 94 von der Gehäuseoberseite 38 weg. Auf diese Weise wird also eine Zugkraft auf das Verbindungselement 34 in Richtung auf die Gehäuseoberseite hin ausgeübt, so dass die Rastglieder 112 gegen die Rückhalteglieder 84 gedrückt werden und den Verbinder 28 in der Sicherungsstellung zusätzlich klemmend sichern.

Alternativ zur Ausgestaltung gemäß Figur 22 kann die zweite Komponente 14 auch eine leicht federnde Eigenschaft aufweisen. Ist die zweite Komponente 14 in Richtung auf die erste Komponente 12 hin weisend schwach konkav gewölbt, wird die zweite Komponente 14 in der Verbindungsstellung durch das Verbindungselement 34 flächig gegen die flache erste Komponente 12 gedrückt. Die zweite Komponente 14 wird so leicht vorgespannt gegen die erste Komponente 12 gehalten.

Die oben beschriebenen Ausführungsbeispiele von Verbindungssystemen 10, Verbindern 28 und zugehörigen Verbindungselementen 34 sind rein beispielhaft.

Bei alternativen Ausführungsbeispielen kann das Gehäuse 30 des Verbinders 28 auch einstückig mit einer der beiden Komponenten 12 oder 14 ausgebildet sein.

Bei nicht dargestellten Ausführungsbeispielen kann auch das Verbindungselement 34 mit einer der beiden Komponenten 12 oder 14 einstückig ausgebildet oder an diese angeformt oder dauerhaft mit dieser verbunden sein. Dies ändert an der beschriebenen Funktionsweise des Verbindungssystems 10, insbesondere im Hinblick auf das Lösen des Eingriffs des Kopplungsabschnitts 92 in die Kopplungsaufnahme 32, nichts. Beispielsweise kann das Ausführungsbeispiel der Figur 3 derart abgeändert werden, dass der Rückhalteabschnitt 94 an die zweite Komponente 14 angeformt oder mit dieser verbunden ist, das Gehäuse 30 des Verbinders 28 kann zudem in die erste Komponente 12 integriert sein. Auf diese Weise ließe sich die Zahl der Teile, die zum Verbinden der beiden Komponenten 12 und 14 bereitgestellt werden müssten, reduzieren.

Die Komponenten 12 und 14 können aus beliebigen Materialien ausgebildet sein, insbesondere aus Kunststoffen oder Metallen. Das Gehäuse 30 des Verbinders 28 kann insbesondere aus einem metallischen Werkstoff oder aus einem Kunststoff ausgebildet sein. Ebenso kann auch der erste Sicherungsabschnitt 70 aus einem Kunststoff oder aus einem metallischen Werkstoff ausgebildet sein.

Statt eines Schaumkörpers 72 können die vorspannenden Elemente 68 auch aus einem nicht dargestelltem Hüllelement mit nur einem Hohlraum ausgebildet werden. Ist der Hohlraum des Hüllelements, das ballonartig ausgebildet werden kann, verschlossen und mit einem komprimierbaren Fluid gefüllt, lässt sich so eine Funktionsweise des abgewandelten Verbindungssystems 10 realisieren, welches einer Funktionsweise der oben beschriebenen Ausführungsbeispiele von Verbindungssystemen 10 entspricht.

Alle beschriebenen Ausführungsbeispiele ermöglichen es insbesondere, die kraft- und/oder formschlüssige Verbindung zwischen dem Verbindungselement 34 und dem Verbinder 28 durch Erhöhen eines Umgebungsdrucks zu lösen. So kann ein automatisches Zerlegen von mechanischen Vorrichtungen 16 mit zwei oder mehrerer miteinander verbundener Komponenten 12, 14, insbesondere auch von Elektrogeräten 26 umfassend derartige mechanische Vorrichtungen 16, ermöglicht werden.

### Bezugszeichenliste

- 10: Verbindungssystem
- 12: erste Komponente
- 14: zweite Komponente
- 16: mechanische Vorrichtung
- 18: Gerätegehäuse
- 20: Gerätewanne
- 22: Gehäusedeckel
- 24: Aufnahmeraum
- 26: Elektrogerät
- 28: Verbinder
- 30: Gehäuse
- 32: Kopplungsaufnahme
- 34: Verbindungselement
- 36: Kopplungslängsachse
- 38: Gehäuseoberseite
- 40: Gehäusewand
- 42: Stirnwand
- 44: Seitenwand
- 46: Einführöffnung
- 48: Gehäuseaußenseite
- 50: erstes Kupplungsglied
- 52: Kupplungsvorsprung
- 54: Gehäuseseitenfläche
- 56: zweites Kupplungsglied
- 58: Kupplungsausnehmung
- 60: Gehäuseaufnahme
- 62: Rahmen
- 63: Gehäuseaufnahmewand
- 64: Sicherungseinrichtung
- 66: erstes Sicherungselement
- 68: vorspannendes Element
- 70: erster Sicherungsabschnitt
- 72: Schaumkörper
- 74: erste Verbindungsfläche
- 76: zweite Verbindungsfläche
- 78: Sicherungselementaufnahme
- 80: erste Spiegelebene
- 82: zweite Spiegelebene
- 84: Rückhalteglied
- 86: Rückhalteausnehmung
- 88: Rückhaltefläche
- 90: erste Aufgleitfläche
- 92: Kopplungsabschnitt
- 94: Rückhalteabschnitt
- 96: Kopf
- 98: Endfläche
- 100: Kopfunterseite
- 102: Abschnitt
- 104: Seitenkante
- 106: Seitenfläche
- 108: Rippe
- 110: Gleitflächenabschnitt
- 112: Rastglied
- 114: Endabschnitt
- 116: Rastvorsprung
- 118: Rastfläche
- 120: zweite Aufgleitfläche
- 122: erster Abstand
- 124: zweiter Abstand
- 126: Ende
- 128: erste Symmetrieebene
- 130: zweite Symmetrieebene
- 132: Lösewinkel
- 134: Werkzeugkupplungsglied
- 136: Werkzeugaufnahme
- 138: Schlitz
- 140: Durchbrechung
- 142: Hinterschneidung
- 144: Rückhalteabschnittsfläche
- 146: Druckkammer
- 148: Druckkammerraum
- 150: Druckerzeugungseinrichtung
- 152: Pumpe
- 154: Umgebung
- 156: Rückhaltevorsprung
- 158: Wandfläche
- 160: Rastausnehmung
- 162: Stirnseite
- 164: Nut
- 166: Gehäuseunterseite
- 168: Durchbrechung
- 170: Gehäuseunterseitenöffnung
- 172: Spannglied
- 174: Ausnehmung

## Patentansprüche

1. Verbindungssystem (10), insbesondere zum kraft- und/oder formschlüssigen Verbinden einer ersten Komponente (12) und einer zweiten Komponente (14), wobei das Verbindungssystem (10) einen Verbinder (28) mit einem Gehäuse (30) umfasst, wobei im Gehäuse (30) eine eine Kopplungslängsachse (36) definierende Kopplungsaufnahme (32) zum Aufnehmen eines Verbindungselements (34) ausgebildet ist, wobei am Gehäuse (30) eine Sicherungseinrichtung (64) angeordnet oder ausgebildet ist zum Sichern eines in die Kopplungsaufnahme (32) eingreifenden Verbindungselements (34) in einer Sicherungsstellung, wobei die Sicherungseinrichtung (64) mindestens ein erstes Sicherungselement (66) umfasst, welches am Gehäuse (30) in einer Ebene quer, insbesondere senkrecht, zur Kopplungslängsachse (36) bewegbar angeordnet oder ausgebildet ist und in der Sicherungsstellung mindestens teilweise mit einem ersten Sicherungsabschnitt (70) in die Kopplungsaufnahme (32) eingreift, wobei das mindestens eine Sicherungselement (66) ein vorspannendes Element (68) umfasst, welches mit dem ersten Sicherungsabschnitt (70) derart zusammenwirkend angeordnet oder ausgebildet ist, dass der erste Sicherungsabschnitt (70) entgegen der Wirkung des vorspannenden Elements (68) von der Sicherungsstellung in eine Freigabestellung bewegbar ist, in welcher das mindestens eine Sicherungselement (66) die Kopplungsaufnahme (32) zumindest so weit freigibt, dass ein in die Kopplungsaufnahme (32) eingreifendes Verbindungselement (34) parallel zur Kopplungslängsachse (36) bewegbar ist, **dadurch gekennzeichnet, dass** das vorspannende Element (68) komprimierbar ausgebildet ist derart, dass es durch Erhöhen eines isotropen Umgebungsdrucks von einer unkomprimierten Ausgangsstellung in eine komprimierte Druckstellung, in welcher ein vom vorspannenden Element (68) definiertes Hüllvolumen kleiner ist als in der Ausgangsstellung, bringbar ist, und dass das vorspannende Element (68) in der Freigabestellung die Druckstellung einnimmt.

2. Verbindungssystem nach Anspruch 1, **dadurch gekennzeichnet, dass**
a) das vorspannende Element (68) den ersten Sicherungsabschnitt (70) umfasst,
wobei insbesondere das vorspannende Element (68) einstückig, insbesondere monolithisch, mit dem ersten Sicherungsabschnitt (70) ausgebildet ist,
und/oder
b) am ersten Sicherungsabschnitt (70) mindestens ein Rückhalteglied (84) angeordnet oder ausgebildet ist, welches eine quer, insbesondere senkrecht, zur Kopplungslängsachse (36) verlaufende Rückhaltefläche (88) aufweist,
wobei insbesondere das mindestens eine Rückhalteglied (84)
- in Form eines Rückhaltevorsprungs (156) oder in Form einer Rückhalteausnehmung (86) ausgebildet ist
und/oder
- eine geneigte, in Richtung auf die Kopplungslängsachse (36) und die Einführöffnung (46) weisende geneigte erste Aufgleitfläche (90) umfasst.

3. Verbindungssystem nach einem der voranstehenden Ansprüche, **dadurch gekennzeichnet, dass** das vorspannende Element (68)
a) in der Sicherungsstellung die Ausgangsstellung einnimmt
und/oder
b) in Form eines, insbesondere isotrop, komprimierbaren Schaumkörpers (72) oder in Form eines elastischen Hüllkörpers mit mindestens einem abgeschlossenen Hohlraum ausgebildet ist,
wobei insbesondere der Schaumkörper (72)
- aus einem geschlossenzelligen oder zumindest teilweise geschlossenzelligen Schaumstoff ausgebildet ist
und/oder
- eine Vielzahl von geschlossenen gasdichten Hohlräumen umfasst und wobei die Hohlräume mit einem komprimierbaren Fluid gefüllt sind,
wobei insbesondere das komprimierbare Fluid ein Gas ist, insbesondere ein Inertgas oder Luft,
und/oder
- aus einem geschäumten Kunststoff ausgebildet ist, insbesondere aus Polypropylen, Polyethylen oder Polystyrol.

4. Verbindungssystem nach einem der voranstehenden Ansprüche, **dadurch gekennzeichnet, dass**
a) das vorspannende Element (68) elastisch verformbar ist
und/oder
b) sich das vorspannende Element (68) zwischen einer Gehäusewand (40) des Gehäuses (30) und dem ersten Sicherungsabschnitt (70) erstreckt
und/oder
c) das vorspannende Element (68), insbesondere mit einer ersten Verbindungsfläche (74), mit dem Gehäuse (30), insbesondere der Gehäusewand (40), kraft- und/oder form- und/oder stoffschlüssig verbunden ist,
wobei insbesondere
- das vorspannende Element (68) ausschließlich im Bereich der ersten Verbindungsfläche (74) mit dem Gehäuse (30), insbesondere der Gehäusewand (40), verbunden ist
und/oder
- die erste Verbindungsfläche (74) und die zweite Verbindungsfläche (76) jeweils einen Teil einer äußeren Oberfläche des vorspannenden Elements (68) bilden.

5. Verbindungssystem nach einem der voranstehenden Ansprüche, **dadurch gekennzeichnet, dass**
a) das vorspannende Element (68), insbesondere mit einer zweiten Verbindungsfläche (76), mit dem ersten Sicherungsabschnitt (70) kraft- und/oder form- und/oder stoffschlüssig verbunden ist
und/oder
b) das mindestens eine Sicherungselement (66) in einer Sicherungselementaufnahme (78) des Gehäuses (30) bewegbar gehalten ist und dass sich das vorspannende Element (68) einerseits am Gehäuse (30) und andererseits am ersten Sicherungsabschnitt (70) abstützt.

6. Verbindungssystem nach einem der voranstehenden Ansprüche, **dadurch gekennzeichnet, dass** das Gehäuse (30) eine Gehäuseoberseite (38) definiert, welche sich quer, insbesondere senkrecht, zur Kopplungslängsachse (36) erstreckt, und dass in der Gehäuseoberseite (38) eine Einführöffnung (46) ausgebildet ist,
wobei insbesondere
a) die Einführöffnung (46) eine unrunde, von einer Kreisform abweichende Querschnittsform aufweist
und/oder
b) die Kopplungsaufnahme (32) die Form eines senkrechten Hohlzylinders aufweist mit einer der Einführöffnung (46) entsprechenden Querschnittsfläche
und/oder
c) eine der Gehäuseoberseite (38) gegenüberliegende Gehäuseunterseite (166) ein Spannglied (172) umfasst oder als Spannglied (172) ausgebildet ist, welches in einer Richtung von der Gehäuseoberseite (38) weg entgegen einer vom Spannglied (172) ausgeübten Rückstellkraft auslenkbar ist,
wobei insbesondere das Spannglied (172) in einer Gehäuseunterseitenöffnung (170) der Gehäuseunterseite (166) angeordnet oder ausgebildet ist,
wobei weiter insbesondere das Spannglied (172) das Gehäuse (30) auf der Gehäuseunterseite (166) mindestens teilweise, insbesondere vollständig, verschließt,
wobei weiter insbesondere das Spannglied (172) die Gehäuseunterseitenöffnung (170) mindestens teilweise, insbesondere vollständig, verschließt.

7. Verbindungssystem nach einem der voranstehenden Ansprüche, **dadurch gekennzeichnet, dass**
a) am Gehäuse (30), insbesondere einer Gehäuseaußenseite (48), mindestens ein erstes Kupplungsglied (50) angeordnet oder ausgebildet ist zum kraft- und/oder formschlüssigen in Eingriff Bringen mit mindestens einem korrespondierend ausgebildeten zweiten Kupplungsglied (56) an einer ersten, mit einer zweiten Komponente (14) zu verbindenden Komponente (12),
wobei insbesondere
- das mindestens eine erste Kupplungsglied (50) in Form eines Kupplungsvorsprungs (52) oder in Form einer Kupplungsausnehmung ausgebildet ist
und/oder
- am Gehäuse (30) zwei erste Kupplungsglieder (50) angeordnet oder ausgebildet sind an in diametraler Richtung voneinander weg weisenden Gehäuseseitenflächen (52), welche sich quer, insbesondere senkrecht, zur Gehäuseoberseite (38) erstrecken,
und/oder
b) das Gehäuse (30)
- quaderförmig oder im Wesentlichen quaderförmig ausgebildet ist
und/oder
- an der ersten, mit einer zweiten Komponente (14) zu verbindenden Komponente (12) angeordnet oder ausgebildet ist, insbesondere einstückig, weiter insbesondere monolithisch.

8. Verbindungssystem nach einem der voranstehenden Ansprüche, **dadurch gekennzeichnet, dass** das Verbindungssystem (10) ein vom Gehäuse (30) separat ausgebildetes Verbindungselement (34) umfasst mit einem Kopplungsabschnitt (92), welcher in die Kopplungsaufnahme (32) einführbar und mit dem ersten Sicherungsabschnitt (70) kraft- und/oder formschlüssig in Eingriff bringbar ist, insbesondere in der Sicherungsstellung,
wobei insbesondere
a) das Verbindungselement (34) an der zweiten, mit der ersten zu verbindenden Komponente (12) angeordnet oder ausgebildet ist, insbesondere einstückig, weiter insbesondere monolithisch,
und/oder
b) an einem Ende des Kopplungsabschnitts (92) ein sich quer zur Kopplungslängsachse (36) erstreckender Rückhalteabschnitt (94) angeordnet oder ausgebildet ist,
wobei insbesondere zwischen dem Rückhalteabschnitt (94) und dem Gehäuse (30) in der Sicherungsstellung eine Hinterschneidung (142) definiert ist,
wobei weiter insbesondere die Hinterschneidung (142) von der Gehäuseoberseite (38) und von einer auf die Gehäuseoberseite (38) hin weisenden Rückhalteabschnittsfläche (144) begrenzt ist,
und/oder
c) an mindestens einem Ende des Verbindungselements (34) ein von diesem und in Richtung der Kopplungslängsachse (36) weg weisendes Werkzeugkupplungsglied (134) angeordnet oder ausgebildet ist zum formschlüssigen in Eingriff Bringen mit einem Eindrehwerkzeug,
wobei insbesondere das Werkzeugkupplungsglied (134) in Form eines Werkzeugvorsprungs oder einer Werkzeugaufnahme (136) ausgebildet ist,
wobei weiter insbesondere die Werkzeugaufnahme (136) in Form eines Schlitzes (138), eines Innenmehrkant oder eines Innenvielrund ausgebildet ist.

9. Verbindungssystem nach Anspruch 8, **dadurch gekennzeichnet, dass**
a) der Kopplungsabschnitt (92) des Verbindungselements (34) einen sich längs seiner Erstreckung quer zur Kopplungslängsachse (36) unrunden, insbesondere sich ändernden, Querschnitt aufweist
und/oder
b) der Kopplungsabschnitt (92) mindestens einen Gleitflächenabschnitt (110), insbesondere zwei einander diametral gegenüberliegende Gleitflächenabschnitte (110), aufweist,
wobei insbesondere der mindestens eine Gleitflächenabschnitt (110) parallel zur Kopplungslängsachse (36) verläuft oder ausgehend von einem freien Ende des Kopplungsabschnitts (92) mit der Kopplungslängsachse (36) einen Öffnungswinkel einschließt.

10. Verbindungssystem nach Anspruch 8 oder 9, **dadurch gekennzeichnet, dass** am Kopplungsabschnitt (92) mindestens ein Rastglied (112) angeordnet oder ausgebildet ist, welches mit dem mindestens einen Rückhalteglied (84) in der Sicherungsstellung in Eingriff steht,
wobei insbesondere
a) das mindestens eine Rastglied (112) in Form eines Rastvorsprungs (116) oder einer Rastausnehmung (160) ausgebildet ist
und/oder
b) ein erster Abstand (122) des mindestens einen Gleitflächenabschnitts (110) von der Kopplungslängsachse (36) in radialer Richtung größer ist als ein zweiter Abstand (124) eines freien, von der Kopplungslängsachse (36) in radialer Richtung weg weisenden Endes (126) des mindestens einen Rastglieds (112) von der Kopplungslängsachse (36)
und/oder
c) eine erste, die Kopplungslängsachse (36) enthaltende Symmetrieebene (128) des mindestens einen Gleitflächenabschnitts (110) in Umfangsrichtung bezogen auf eine zweite, die Kopplungslängsachse (36) enthaltende Symmetrieebene (130) des mindestens einen Rastglieds (112) zwischen sich einen Lösewinkel (132) einschließen,
wobei insbesondere der Lösewinkel (132) in einem Bereich von 80° bis etwa 220° liegt, insbesondere in einem Bereich von etwa 80° bis etwa 110° oder in einem Bereich von etwa 140° bis etwa 220°, weiter insbesondere etwa 90° oder etwa 180° beträgt,
und/oder
d) sich das mindestens eine Rastglied (112) in Umfangsrichtung bezogen auf die Kopplungslängsachse (36) über einen Umfangswinkel in einem Bereich von etwa 100° bis etwa 175° erstreckt
und/oder
e) das Verbindungselement (34) relativ zum Gehäuse (30) ausgehend von der Sicherungsstellung in eine Lösestellung, in welcher der mindestens eine Gleitflächenabschnitt (110) am ersten Sicherungsabschnitt (70) anliegt, verdrehbar ist, insbesondere um den Lösewinkel (132),
und/oder
f) das mindestens eine Rastglied (112) eine sich quer, insbesondere senkrecht, zur Kopplungslängsachse (36) erstreckende Rastfläche (118) aufweist, welche in der Sicherungsstellung an der Rückhaltefläche (88) des mindestens einen Rückhalteglieds (112) anliegt,
und/oder
g) das mindestens eine Rastglied (112) und/oder ein freies Ende des Kopplungsabschnitts (92) eine geneigte, von der Kopplungslängsachse (36) und der Einführöffnung (46) weg weisende geneigte zweite Aufgleitfläche (120) umfasst, welche beim Einführen des Verbindungselements (34) in die Kopplungsaufnahme (32) am ersten Sicherungsabschnitt (70) aufgleitet und diesen dabei entgegen der Wirkung des vorspannenden Elements (68) von der Kopplungslängsachse (36) weg bewegt.

11. Verbindungssystem nach einem der voranstehenden Ansprüche, **dadurch gekennzeichnet, dass** es eine Druckkammer (146) mit einem mit einem kompressiblen Fluid befüllten Druckkammerraum (148) zum Aufnehmen einer mit dem Verbindungssystem (10) verbundenen ersten und zweiten Komponente (12, 14) und eine Druckerzeugungseinrichtung (150) umfasst zum Erhöhen eines Fluiddrucks im Druckkammerraum (148) gegenüber einem Umgebungsdruck der Druckkammer (146).

12. Mechanische Vorrichtung (16) mit einer ersten Komponente (12) und einer zweiten Komponente (14), wobei die erste Komponente (12) und die zweite Komponente (14) miteinander verbunden sind, **dadurch gekennzeichnet, dass** die erste Komponente (12) und die zweite Komponente (14) mit einem Verbindungssystem (10) nach einem der voranstehenden Ansprüche miteinander verbunden sind.

13. Mechanische Vorrichtung nach Anspruch 12, **dadurch gekennzeichnet, dass** die mechanische Vorrichtung (16) in Form eines Gerätegehäuses (18) mit einer Gehäusewanne (20) und einem Gehäusedeckel (22) zum Verschließen der Gehäusewanne (20) ausgebildet ist, dass die Gehäusewanne (20) die erste Komponente (12) bildet und dass der Gehäusedeckel (22) die zweite Komponente (14) bildet,
wobei insbesondere das Gerätegehäuse (18) in Form eines Gerätegehäuses (18) eines Elektrogeräts (26) ausgebildet ist.

14. Verfahren zum automatischen Lösen einer ersten Komponente (12) und einer zweiten Komponente (14) voneinander, welche miteinander verbunden sind, **dadurch gekennzeichnet, dass** die erste Komponente (12) und die zweite Komponente (14) mit einem Verbindungssystem (10) nach einem der voranstehenden Ansprüche miteinander verbunden sind, dass die miteinander verbundenen ersten und zweiten Komponenten (12,14) bei Atmosphärendruck in einen Druckkammerraum (148) einer Druckkammer (146) eingebracht werden, dass die Druckkammer (146) geschlossen und der Druck in der Druckkammer (146) erhöht wird zum Überführen des vorspannenden Elements (68) von der Ausgangsstellung in die Druckstellung,
wobei insbesondere zum Lösen des Verbindungselements (34) vom Verbinder (28) die Druckkammer (146) bewegt, insbesondere geschüttelt, wird.

15. Verwendung einer Druckkammer (146) mit einem mit einem kompressiblen Fluid befüllten Druckkammerraum (148) und einer Druckerzeugungseinrichtung (150) zum Erhöhen eines Fluiddrucks im Druckkammerraum (148) gegenüber einem Umgebungsdruck der Druckkammer (146) zur Durchführung eines Verfahrens nach Anspruch 14.

## Claims

1. Connection system (10), in particular for connecting a first component (12) and a second component (14) in a force-locking and/or positive-locking manner, wherein the connection system (10) comprises a connector (28) having a housing (30), wherein formed in the housing (30) is a coupling receptacle (32) defining a coupling longitudinal axis (36) for receiving a connecting element (34), wherein a securing device (64) is arranged or formed on the housing (30) for securing a connecting element (34) engaging into the coupling receptacle (32) in a securing position, wherein the securing device (64) comprises at least one first securing element (66), which is arranged or formed on the housing (30) so as to be movable in a plane transverse, in particular perpendicular, to the coupling longitudinal axis (36) and which in the securing position engages at least partially with a first securing portion (70) into the coupling receptacle (32), wherein the at least one securing element (66) comprises a biasing element (68), which is arranged or formed cooperating with the first securing portion (70) in such a way that the first securing portion (70) is movable against the action of the biasing element (68) from the securing position into a release position in which the at least one securing element (66) releases the coupling receptacle (32) at least to an extent that a connecting element (34) engaging into the coupling receptacle (32) is movable in parallel with the coupling longitudinal axis (36), **characterized in that** the biasing element (68) is configured to be compressible in such a way that, by increasing an isotropic ambient pressure, it is bringable from an uncompressed starting position into a compressed pressure position in which an envelope volume defined by the biasing element (68) is smaller than in the starting position, and **in that** the biasing element (68) in the release position adopts the pressure position.

2. Connection system in accordance with Claim 1, **characterized in that**
a) the biasing element (68) comprises the first securing portion (70), wherein in particular the biasing element (68) is formed in one piece, in particular monolithically, with the first securing portion (70),
and/or
b) arranged or formed on the first securing portion (70) is at least one retaining member (84), which has a retaining face (88) extending transversely, in particular perpendicularly, to the coupling longitudinal axis (36),
wherein in particular the at least one retaining member (84)
- is configured in the form of a retaining projection (156) or in the form of a retaining recess (86)
and/or
- comprises an inclined first sliding face (90) inclined in the direction toward the coupling longitudinal axis (36) and the insertion opening (46).

3. Connection system in accordance with any one of the preceding Claims, **characterized in that** the biasing element (68)
a) in the securing position adopts the starting position
and/or
b) is configured in the form of an, in particular isotropically, compressible foam body (72) or in the form of an elastic enveloping body having at least one enclosed hollow space,
wherein in particular the foam body (72)
- is made of a closed-cell or at least partially closed-cell foam material
and/or
- comprises a multitude of closed gas-tight hollow spaces, and wherein the hollow spaces are filled with a compressible fluid, wherein in particular the compressible fluid is a gas, in particular an inert gas or air,
and/or
- is made of a foamed plastic material, in particular of polypropylene, polyethylene, or polystyrene.

4. Connection system in accordance with any one of the preceding Claims, **characterized in that**
a) the biasing element (68) is elastically deformable
and/or
b) the biasing element (68) extends between a housing wall (40) of the housing (30) and the first securing portion (70)
and/or
c) the biasing element (68) is connected, in particular with a first connecting face (74), to the housing (30), in particular the housing wall (40), in a force-locking and/or positive-locking and/or materially bonded manner,
wherein in particular
- the biasing element (68) is connected to the housing (30), in particular the housing wall (40), exclusively in the region of the first connecting face (74)
and/or
- the first connecting face (74) and the second connecting face (76) each form a portion of an outer surface of the biasing element (68).

5. Connection system in accordance with any one of the preceding Claims, **characterized in that**
a) the biasing element (68) is connected, in particular with a second connecting face (76), to the first securing portion (70) in a force-locking and/or positive-locking and/or materially bonded manner and/or
b) the at least one securing element (66) is movably held in a securing element receptacle (78) of the housing (30) and **in that** the biasing element (68) is supported on the housing (30) on the one hand and on the securing portion (70) on the other hand.

6. Connection system in accordance with any one of the preceding Claims, **characterized in that** the housing (30) defines a housing upper side (38), which extends transversely, in particular perpendicularly, to the coupling longitudinal axis (36), and **in that** an insertion opening (46) is formed in the housing upper side (38),
wherein in particular
a) the insertion opening (46) has a non-round cross-sectional shape deviating from a circular shape
and/or
b) the coupling receptacle (32) has the shape of a perpendicular hollow cylinder having a cross-sectional area corresponding to the insertion opening (46)
and/or
c) a housing lower side (166) located opposite the housing upper side (38) comprises a clamping member (172) or is configured as a clamping member (172), which is deflectable in a direction away from the housing upper side (38) against a restoring force exerted by the clamping member (172),
wherein in particular the clamping member (172) is arranged or formed in a housing lower side opening (170) of the housing lower side (166),
wherein further in particular the clamping member (172) closes the housing (30) at least partially, in particular completely, on the housing lower side (166),
wherein further in particular the clamping member (172) closes the housing lower side opening (170) at least partially, in particular completely.

7. Connection system in accordance with any one of the preceding Claims, **characterized in that**
a) at least one first coupling member (50) is arranged or formed on the housing (30), in particular a housing outer side (48), for being brought into engagement in a force-locking and/or positive-locking manner with at least one correspondingly formed second coupling member (56) on a first component (12) to be connected to a second component (14),
wherein in particular
- the at least one first coupling member (50) is configured in the form of a coupling projection (52) or in the form of a coupling recess
and/or
- two first coupling members (50) are arranged or formed on the housing (30) on housing side faces (52) which face away from one another in a diametrical direction and extend transversely, in particular perpendicularly, to the housing upper side (38),
and/or
b) the housing (30)
- is of cuboidal or substantially cuboidal configuration
and/or
- is arranged or formed, in particular in one piece, further in particular monolithically, on the first component (12) to be connected to a second component (14).

8. Connection system in accordance with any one of the preceding Claims, **characterized in that** the connection system (10) comprises a connecting element (34) formed separately from the housing (30), said connecting element (34) having a coupling portion (92) which is insertable into the coupling receptacle (32) and is bringable into engagement in a force-locking and/or positive-locking manner with the first securing portion (70), in particular in the securing position,
wherein in particular
a) the connecting element (34) is arranged or formed, in particular in one piece, further in particular monolithically, on the second component (12) to be connected to the first,
and/or
b) a retaining portion (94) extending transversely to the coupling longitudinal axis (36) is arranged or formed on an end of the coupling portion (92),
wherein in particular in the securing position an undercut (142) is defined between the retaining portion (94) and the housing (30), wherein further in particular the undercut (142) is delimited by the housing upper side (38) and by a retaining portion face (144) facing toward the housing upper side (38),
and/or
c) arranged or formed on at least one end of the connecting element (34) is a tool coupling member (134) facing away therefrom and in the direction of the coupling longitudinal axis (36) for being brought into engagement with a driving tool in a positive-locking manner,
wherein in particular the tool coupling member (134) is configured in the form of a tool projection or a tool receptacle (136),
wherein further in particular the tool receptacle (136) is configured in the form of a slit (138), a polygonal socket, or a multilobular socket.

9. Connection system in accordance with Claim 8, **characterized in that**
a) the coupling projection (92) of the connecting element (34) has a non-round cross-section, in particular varying along its extent transverse to the coupling longitudinal axis (36)
and/or
b) the coupling portion (92) has at least one sliding face portion (110), in particular two diametrically opposed sliding face portions (110),
wherein in particular the at least one sliding face portion (110) extends in parallel with the coupling longitudinal axis (36) or encloses an opening angle with the coupling longitudinal axis (36) commencing from a free end of the coupling portion (92).

10. Connection system in accordance with Claim 8 or 9, **characterized in that** arranged or formed on the coupling portion (92) is at least one latching member (112), which is in engagement with the at least one retaining member (84) in the securing position,
wherein in particular
a) the at least one latching member (112) is configured in the form of a latching projection (116) or a latching recess (160)
and/or
b) a first distance (122) of the at least one sliding face portion (110) from the coupling longitudinal axis (36) in the radial direction is greater than a second distance (124) of a free end (126) of the at least one latching member (112) pointing away from the coupling longitudinal axis (36) in the radial direction from the coupling longitudinal axis (36)
and/or
c) a first symmetry plane (128) of the at least one sliding face portion (110) containing the coupling longitudinal axis (36) together with a second symmetry plane (130) of the at least one latching member (112) containing the coupling longitudinal axis (36) enclose between them a release angle (132) in the circumferential direction,
wherein in particular the release angle (132) is in a range of 80° to about 220°, in particular in a range of about 80° to about 110°, or in a range of about 140° to about 220°, further in particular about 90° or about 180°,
and/or
d) the at least one latching member (112) extends in the circumferential direction over a circumferential angle in a range of about 100° to about 175° relative to the coupling longitudinal axis (36)
and/or
e) the connecting element (34) is rotatable relative to the housing (30), in particular by the release angle (132), commencing from the securing position into a release position in which the at least one sliding face portion (110) abuts against the first securing portion (70),
and/or
f) the at least one latching member (112) comprises a latching face (118), which extends transversely, in particular perpendicularly, to the coupling longitudinal axis (36) and which in the securing position abuts against the retaining face (88) of the at least one retaining member (112),
and/or
g) the at least one latching member (112) and/or a free end of the coupling portion (92) comprises an inclined second sliding face (120), which faces away from the coupling longitudinal axis (36) and the insertion opening (46) and which upon insertion of the connecting element (34) into the coupling receptacle (32) slides on the first securing portion (70) and thereby moves it away from the coupling longitudinal axis (36) against the action of the biasing element (68).

11. Connection system in accordance with any one of the preceding Claims, **characterized in that** it comprises a pressure chamber (146) having a pressure chamber space (148) filled with a compressible fluid for receiving a first and second component (12, 14) connected with the connection system (10) and comprises a pressure generating device (150) for increasing a fluid pressure in the pressure chamber space (148) compared to an ambient pressure of the pressure chamber (146).

12. Mechanical device (16) having a first component (12) and a second component (14), wherein the first component (12) and the second component (14) are connected to one another, **characterized in that** the first component (12) and the second component (14) are connected to one another with a connection system (10) in accordance with any one of the preceding Claims.

13. Mechanical device in accordance with Claim 12, **characterized in that** the mechanical device (16) is configured in the form of an appliance housing (18) having a housing tray (20) and a housing lid (22) for closing the housing tray (20), **in that** the housing tray (20) forms the first component (12), and **in that** the housing lid (22) forms the second component (14),
wherein in particular the appliance housing (18) is configured in the form of an appliance housing (18) of an electrical appliance (26).

14. Method for automatically releasing a first component (12) and a second component (14) from one another, which are connected to one another, **characterized in that** the first component (12) and the second component (14) are connected to one another with a connection system (10) in accordance with any one of the preceding Claims, **in that** the first and second components (12, 14) connected to one another are introduced into a pressure chamber space (148) of a pressure chamber (146) at atmospheric pressure, **in that** the pressure chamber (146) is closed and the pressure in the pressure chamber (146) is increased to transfer the biasing element (68) from the starting position into the pressure position,
wherein in particular the pressure chamber (146) is moved, in particular shaken, to release the connecting element (34) from the connector (28).

15. Use of a pressure chamber (146) having a pressure chamber space (148) filled with a compressible fluid and having a pressure generating device (150) for increasing a fluid pressure in the pressure chamber space (148) compared to an ambient pressure of the pressure chamber (146) for performing a method in accordance with Claim 14.

## Revendications

1. Système de raccordement (10), en particulier pour raccorder par adhérence et/ou par complémentarité de forme un premier composant (12) et un deuxième composant (14), le système de raccordement (10) comprenant un connecteur (28) avec un boîtier (30), un logement d'accouplement (32) définissant un axe longitudinal d'accouplement (36) étant formé dans le boîtier (30) pour recevoir un élément de raccordement (34), un dispositif de sécurité (64) étant agencé ou formé sur le boîtier (30) pour fixer un élément de raccordement (34) s'engageant dans le logement d'accouplement (32) dans une position de sécurité , le dispositif de sécurité (64) comprenant au moins un premier élément de sécurité (66) qui est agencé ou conçu sur le boîtier (30) de manière à pouvoir se déplacer dans un plan transversal, en particulier perpendiculaire, à l'axe longitudinal d'accouplement (36) et, en position de sécurité, s'engageant au moins partiellement avec une première partie de fixation (70) dans le logement d'accouplement (32), le ou les éléments de sécurité (66) comprenant un élément de précontrainte (68) qui est agencé ou conçu de manière à coopérer avec la première partie de fixation (70) de telle sorte que la première partie de fixation (70) puisse être déplacée de la position de sécurité à une position de libération à l'encontre de l'action de l'élément de précontrainte (68), dans lequel le ou les éléments de sécurité (66) libèrent le logement d'accouplement (32) au moins dans une mesure telle qu'un élément de raccordement (34) s'engageant dans le logement d'accouplement (32) peut se déplacer parallèlement à l'axe longitudinal d'accouplement (36), **caractérisé en ce que** l'élément de précontrainte (68) est conçu de manière compressible de telle sorte qu'il peut être amené, par augmentation d'une pression ambiante isotrope, d'une position initiale non comprimée à une position comprimée dans laquelle un volume d'enveloppe défini par l'élément de précontrainte (68) est plus petit que dans la position initiale, et **en ce que** l'élément de précontrainte (68) prend la position de pression dans la position de libération.

2. Système de raccordement selon la revendication 1, **caractérisé en ce que**
a) l'élément de précontrainte (68) comprend la première partie de fixation (70),
l'élément de précontrainte (68) étant notamment réalisé d'un seul tenant, notamment monolithique, avec la première partie de fixation (70),
et/ou
b) au moins un élément de retenue (84) est agencé ou formé sur la première partie de fixation (70), lequel élément de retenue présente une surface de retenue (88) s'étendant transversalement, en particulier perpendiculairement, à l'axe longitudinal d'accouplement (36),
dans lequel en particulier le au moins un élément de retenue (84)
- est réalisé sous la forme d'une saillie de retenue (156) ou sous la forme d'un évidement de retenue (86)
et/ou
- comprend une première surface de glissement inclinée (90) orientée vers l'axe longitudinal d'accouplement (36) et l'ouverture d'introduction (46).

3. Système de raccordement selon l'une des revendications précédentes, **caractérisé en ce que** l'élément de précontrainte (68)
a) occupe la position initiale dans la position de sécurité
et/ou
b) est réalisé sous la forme d'un corps en mousse compressible (72), en particulier isotrope, ou sous la forme d'un corps d'enveloppe élastique avec au moins une cavité fermée,
le corps en mousse (72) étant en particulier
- constitué d'une mousse à cellules fermées ou au moins partiellement fermées
et/ou
- comprend une pluralité de cavités fermées étanches au gaz, les cavités étant remplies d'un fluide compressible, le fluide compressible étant en particulier un gaz, en particulier un gaz inerte ou de l'air,
et/ou
- étant constitué d'une matière plastique expansée, en particulier de polypropylène, polyéthylène ou polystyrène.

4. Système de raccordement selon l'une des revendications précédentes, **caractérisé en ce que**
a) l'élément de précontrainte (68) est élastiquement déformable et/ou
b) l'élément de précontrainte (68) s'étend entre une paroi (40) du boîtier (30) et la première partie de fixation (70)
et/ou
c) l'élément de précontrainte (68), en particulier avec une première surface de raccordement (74), est relié au boîtier (30), en particulier à la paroi (40) du boîtier, par adhérence et/ou par complémentarité de forme et/ou par liaison de matière,
dans lequel, en particulier,
- l'élément de précontrainte (68) est relié exclusivement dans la zone de la première surface de raccordement (74) au boîtier (30), en particulier à la paroi (40) du boîtier,
et/ou
- la première surface de raccordement (74) et la deuxième surface de raccordement (76) forment chacune une partie d'une surface extérieure de l'élément de précontrainte (68).

5. Système de raccordement selon l'une des revendications précédentes, **caractérisé en ce que**
a) l'élément de précontrainte (68), en particulier avec une deuxième surface de raccordement (76), est relié à la première partie de fixation (70) par adhérence et/ou par complémentarité de forme et/ou par raccordement matière
et/ou
b) le ou les éléments de fixation (66) sont maintenus de manière mobile dans un logement d'élément de fixation (78) du boîtier (30) et **en ce que** l'élément de précontrainte (68) s'appuie d'une part sur le boîtier (30) et d'autre part sur la première partie de fixation (70).

6. Système de raccordement selon l'une des revendications précédentes, **caractérisé en ce que** le boîtier (30) définit une face supérieure (38) qui s'étend transversalement, en particulier perpendiculairement, à l'axe longitudinal d'accouplement (36), et **en ce qu'**une ouverture d'introduction (46) est formée dans la face supérieure (38) du boîtier, dans lequel, en particulier,
a) l'ouverture d'introduction (46) présente une forme de partie transversale non circulaire, s'écartant d'une forme circulaire et/ou
b) le logement d'accouplement (32) présente la forme d'un cylindre creux vertical avec une surface de partie transversale correspondant à l'ouverture d'introduction (46)
et/ou
c) une face inférieure (166) du boîtier, opposée à la face supérieure (38) du boîtier, comprend un élément de serrage (172) ou est conçue comme un élément de serrage (172) qui peut être dévié dans une direction s'éloignant de la face supérieure (38) du boîtier, à l'encontre d'une force de rappel exercée par l'élément de serrage (172),
l'élément de serrage (172) étant notamment agencé ou conçu dans une ouverture (170) de la face inférieure (166) du boîtier,
l'élément de serrage (172) fermant en outre en particulier au moins partiellement, en particulier complètement, le boîtier (30) sur la face inférieure (166) du boîtier,
l'élément de serrage (172) fermant en outre en particulier au moins partiellement, en particulier complètement, l'ouverture de la face inférieure (170) du boîtier.

7. Système de raccordement selon l'une des revendications précédentes, **caractérisé en ce que**
a) au moins un premier élément d'accouplement (50) est agencé ou formé sur le boîtier (30), en particulier sur une face extérieure (48) du boîtier, pour s'engager par adhérence et/ou par complémentarité de forme avec au moins un deuxième élément d'accouplement (56) de forme correspondante sur un premier composant (12) à relier à un deuxième composant (14),
dans lequel, en particulier,
- l'au moins un premier élément d'accouplement (50) est formé sous la forme d'une saillie d'accouplement (52) ou sous la forme d'un évidement d'accouplement
et/ou
- deux premiers éléments d'accouplement (50) sont agencés ou formés sur le boîtier (30) sur des surfaces latérales du boîtier (52) s'étendant diamétralement l'une par rapport à l'autre, qui s'étendent transversalement, en particulier perpendiculairement, à la face supérieure du boîtier(38),
et/ou
b) le boîtier (30)
- est de forme parallélépipédique ou essentiellement parallélépipédique
et/ou
- est agencé ou formé sur le premier composant (12) à relier à un deuxième composant (14), en particulier d'un seul tenant, et plus particulièrement encore de manière monolithique.

8. Système de raccordement selon l'une des revendications précédentes, **caractérisé en ce que** le système de raccordement (10) comprend un élément de raccordement (34) formé séparément du boîtier (30) avec une partie d'accouplement (92) qui peut être introduite dans le logement d'accouplement (32) et qui peut être mise en prise avec la première partie de fixation (70) par adhérence et/ou par complémentarité de forme, en particulier dans la position de fixation,
dans lequel, en particulier,
a) l'élément de raccordement (34) est agencé ou formé sur le deuxième composant à relier au premier composant (12), en particulier d'un seul tenant, et en particulier de manière monolithique,
et/ou
b) une partie de retenue (94) s'étendant transversalement à l'axe longitudinal d'accouplement (36) est agencée ou formée à une extrémité de la partie d'accouplement (92),
une contre-dépouille (142) étant notamment définie entre la partie de retenue (94) et le boîtier (30) dans la position de sécurité,
la contre-dépouille (142) étant en outre en particulier délimitée par la face supérieure (38) du boîtier et par une surface (144) de la partie de retenue tournée vers la face supérieure (38) du boîtier,
et/ou
c) un élément d'accouplement d'outil (134) s'éloignant de l'élément de raccordement (34) est formé à au moins une extrémité de celui-ci et dans la direction de l'axe longitudinal d'accouplement (36) pour s'engager par complémentarité de forme avec un outil de vissage,
l'élément d'accouplement d'outil (134) étant notamment conçu sous la forme d'une saillie d'outil ou d'un logement d'outil (136),
le logement d'outil (136) étant en outre en particulier conçu sous la forme d'une fente (138), d'un polygone intérieur ou d'un profil polygonal intérieur.

9. Système de raccordement selon la revendication 8, **caractérisé en ce que**
a) la partie d'accouplement (92) de l'élément de raccordement (34) présente, sur toute sa longueur, une partie transversale non circulaire, en particulier variable, transversalement à l'axe longitudinal d'accouplement (36)
et/ou
b) la partie d'accouplement (92) présente au moins une partie de surface de glissement (110), en particulier deux parties de surface de glissement (110) diamétralement opposées l'une à l'autre, en particulier l'au moins une partie de surface de glissement (110) s'étendant parallèlement à l'axe longitudinal d'accouplement (36) ou formant un angle d'ouverture avec l'axe longitudinal d'accouplement (36) à partir d'une extrémité libre de la partie d'accouplement (92).

10. Système de raccordement selon la revendication 8 ou 9, **caractérisé en ce qu'**au moins un élément d'encliquetage (112) est agencé ou formé sur la partie d'accouplement (92), lequel élément d'encliquetage s'engage avec l'au moins un élément de retenue (84) dans la position de sécurité, dans lequel en particulier
a) le ou les éléments d'encliquetage (112) sont réalisés sous la forme d'une saillie d'encliquetage (116) ou d'un évidement d'encliquetage (160)
et/ou
b) une première distance (122) entre la ou les parties de surface de glissement (110) par rapport à l'axe longitudinal d'accouplement (36) dans la direction radiale est supérieure à une deuxième distance (124) entre une extrémité libre (126) dudit au moins un élément d'encliquetage (112), s'éloignant de l'axe longitudinal d'accouplement (36) dans la direction radiale, et l'axe longitudinal d'accouplement (36)
et/ou
c) un premier plan de symétrie (128) de l'au moins une partie de surface de glissement (110) contenant l'axe longitudinal d'accouplement (36) dans la direction circonférentielle par rapport à un deuxième plan de symétrie (130) contenu dans l'axe longitudinal d'accouplement (36) de l'au moins un élément d'encliquetage (112) formant entre eux un angle de dégagement (132),
l'angle de dégagement (132) se situant en particulier dans une plage comprise entre 80° et environ 220°, en particulier dans une plage comprise entre environ 80° et environ 110° ou dans une plage comprise entre environ 140° et environ 220°, et en particulier environ 90° ou environ 180°,
et/ou
d) l'au moins un élément d'encliquetage (112) s'étend dans la direction circonférentielle par rapport à l'axe longitudinal d'accouplement (36) sur un angle circonférentiel compris entre environ 100° et environ 175°
et/ou
e) l'élément de raccordement (34) peut être tourné par rapport au boîtier (30) à partir de la position de sécurité vers une position de sécurité dans laquelle l'au moins une partie de surface de glissement (110) repose contre la première partie de fixation (70), en particulier autour de l'angle de dégagement (132),
et/ou
f) l'au moins un élément d'encliquetage (112) présente une surface d'encliquetage (118) s'étendant transversalement, en particulier perpendiculairement, à l'axe longitudinal d'accouplement (36), lequel repose dans la position de sécurité contre la surface de retenue (88) de l'au moins un élément de retenue (112),
et/ou
g) l'au moins un élément d'encliquetage (112) et/ou une extrémité libre de la partie d'accouplement (92) comprend une deuxième surface de glissement inclinée (120) s'éloignant de l'axe longitudinal d'accouplement (36) et de l'ouverture d'introduction (46) qui, lors de l'introduction de l'élément de raccordement (34) dans le logement d'accouplement (32), glisse sur la première partie de fixation (70) et l'éloigne ainsi de l'axe longitudinal d'accouplement (36) à l'encontre de l'action de l'élément de précontrainte (68).

11. Système de raccordement selon l'une des revendications précédentes, **caractérisé en ce qu'**il comprend une chambre de pression (146) avec un espace de chambre de pression (148) rempli d'un fluide compressible pour recevoir un premier et un deuxième composants (12, 14) reliés au système de raccordement (10) et un dispositif de génération de pression (150) pour augmenter la pression du fluide dans l'espace de la chambre de pression (148) par rapport à la pression ambiante de la chambre de pression (146).

12. Dispositif mécanique (16) comprenant un premier composant (12) et un deuxième composant (14), le premier composant (12) et le deuxième composant (14) étant reliés l'un à l'autre, **caractérisé en ce que** le premier composant (12) et le deuxième composant (14) sont reliés l'un à l'autre par un système de raccordement (10) selon l'une des revendications précédentes.

13. Dispositif mécanique selon la revendication 12, **caractérisé en ce que** le dispositif mécanique (16) est conçu sous la forme d'un boîtier d'appareil (18) avec une cuve de boîtier (20) et un couvercle de boîtier (22) pour fermer la cuve de boîtier (20), **en ce que** la cuve de boîtier (20) forme le premier composant (12) et **en ce que** le couvercle de boîtier (22) forme le deuxième composant (14),
le boîtier d'appareil (18) étant notamment conçu sous la forme d'un boîtier d'appareil (18) d'un appareil électrique (26).

14. Procédé pour séparer automatiquement l'un de l'autre un premier composant (12) et un deuxième composant (14) qui sont reliés entre eux, **caractérisé en ce que** le premier composant (12) et le deuxième composant (14) sont reliés l'un à l'autre par un système de raccordement (10) selon l'une des revendications précédentes, **en ce que** les premier et deuxième composants (12, 14) reliés l'un à l'autre sont introduits à la pression atmosphérique dans un espace de chambre de pression (148) d'une chambre de pression (146), **en ce que** la chambre de pression (146) est fermée et la pression dans la chambre de pression (146) est augmentée pour transférer l'élément de précontrainte (68) de la position initiale à la position de pression,
la chambre de pression (146) étant notamment déplacée, en particulier secouée, pour détacher l'élément de raccordement (34) du connecteur (28).

15. Utilisation d'une chambre de pression (146) avec un espace de chambre de pression (148) rempli d'un fluide compressible et un dispositif de génération de pression (150) pour augmenter la pression du fluide dans l'espace de chambre de pression (148) par rapport à la pression ambiante de la chambre de pression (146) afin de mettre en œuvre un procédé selon la revendication 14.
